# EUROPÄISCHE PATENTSCHRIFT

(11) **EP 3 706 028 B1**
(45) Veröffentlichungstag und Bekanntmachung des Hinweises auf die Patenterteilung: **20.08.2025**
(21) Anmeldenummer: 20160011.1
(22) Anmeldetag: 28.02.2020
(51) Int. Cl.: G06F 30/23, B21D 1/06, B21D 5/02, B21J 13/02, B21D 37/08, B21D 37/20, G06F 111/10, G06F 113/24, G06F 119/18

(54) **KOMPENSATION DER RÜCKFEDERUNG BEI DER MEHRSTUFIGEN HERSTELLUNG VON UMFORMTEILEN**
COMPENSATION FOR RESILIENCE DURING THE MULTI-STAGE PRODUCTION OF SHAPED PARTS
COMPENSATION DU RETOUR ÉLASTIQUE DANS LA FABRICATION EN PLUSIEURS ÉTAPES DE PIÈCES MOULÉES

(30) Priorität: 06.03.2019 DE 102019203082
(43) Veröffentlichungstag der Anmeldung: 09.09.2020
(73) Patentinhaber: inigence gmbh, 74626 Bretzfeld (DE); Hochschule Heilbronn, 74081 Heilbronn (DE)
(72) Erfinder: Birkert, Arndt, 74626 Bretzfeld (DE); Hartmann, Benjamin, 97950 Grossrinderfeld (DE); Lepple, Felix, 74199 Oberheinriet (DE); Zimmermann, Phillip, 74177 Bad Friedrichshall (DE); Straub, Markus, 74182 Obersulm (DE)
(74) Vertreter: Patentanwälte Ruff, Wilhelm, Beier, Dauster & Partner mbB

(56) Entgegenhaltungen:
- GIANFRANCO RUGGIERO ET AL: "The Challenge of Compensation: The Use of the Draw-Shell Method", FORMINGWORLD, 11 October 2017 (2017-10-11), pages 1 - 5, XP055718006, Retrieved from the Internet <URL:https://formingworld.com/draw-shell-method-compensation/> [retrieved on 20200724]
- A. BIRKERT ET AL.: "Optimization of the process robustness of the stamping of complex body parts with regard to dimensional accuracy", IOP CONFERENCE SERIES: MATERIALS SCIENCE AND ENGINEERING, vol. 418, 2018, pages 012107, XP002799852
- AUTOFORM: "Virtual-Engineering Best Practices", METALFORMING MAGAZINE, 1 May 2018 (2018-05-01), pages 1 - 3, XP055718010, Retrieved from the Internet <URL:https://www.metalformingmagazine.com/article/?/software/die-design-and-simulation/virtual-engineering-best-practices> [retrieved on 20200724]
- AUTOFORM: "Springback R7 Update Advanced Training", AUTOFORM, 19 January 2017 (2017-01-19), XP055898950, Retrieved from the Internet <URL:https://www.autoform.com/de/newsroom/mitteilungen/autoform-plus-r7-die-naechste-stufe-der-prozesssimulation/>

## Beschreibung

### ANWENDUNGSGEBIET UND STAND DER TECHNIK

Die Erfindung bezieht sich auf ein Verfahren zur Ermittlung rückfederungs-kompensierter Wirkgeometrien für Umformwerkzeuge, die zur Herstellung eines Umformteils mittels einer Abfolge mehrerer aufeinanderfolgender Formoperationen vorgesehen sind.

Die Herstellung von Umformteilen aus Blech, insbesondere von Karosserieteilen für Fahrzeuge, erfolgt üblicherweise mittels mehrstufiger Formprozesse, die eine Abfolge mehrerer aufeinanderfolgender Formoperationen aufweisen. Hierbei wird üblicherweise ein Halbzeug in Form einer Blechplatine zunächst mittels eines Umformverfahrens, zum Beispiel durch Tiefziehen bzw. Karosserieziehen oder Formprägen, umgeformt und hiernach in weiteren Formoperationen weiterbearbeitet. Diese weiteren Formoperationen können beispielsweise eine weitere ziehtechnische Bearbeitung, ein Beschneiden, ein Nachschlagen, ein Einstellen, ein Nachformen oder dergleichen vorsehen.

Die Werkzeugherstellung eines Umformwerkzeugs verläuft typischerweise in zahlreichen Stufen. Eine umfassende Darstellung findet sich in dem Fachbuch: A. Birkert, S. Haage, M. Straub: "Umformtechnische Herstellung komplexer Karosserieteile - Auslegung von Ziehanlagen", Springer Vieweg-Verlag (2013), Kapitel 5.9. Dabei wird bis zur Stufe der sogenannten Werkzeugeinarbeitung und Werkzeugausprobe zunächst ein grundsätzlich funktionsfähiges Umformwerkzeug hergestellt. Daran schließt sich die Stufe der Werkzeugkorrektur an, die auch die Werkzeugkompensation beinhaltet. Die Werkzeugkompensation beinhaltet solche Maßnahmen, die am grundsätzlich funktionsfähigen Umformwerkzeug vorgenommen werden, um neben einer reißerfreien und faltenfreien Herstellbarkeit auch eine anforderungsgerechte Maß- und Formhaltigkeit des herzustellenden Umformteils zu gewährleisten.

Die im Rahmen der Werkzeugkompensation vorzunehmenden Maßnahmen sind erforderlich, da sich komplexe Umformteile in der Praxis bei Werkzeugnullgeometrie nicht auf Anhieb innerhalb vorgegebener Maß- und Formtoleranzen fertigen lassen. Dabei haben Toleranzabweichungen am ersten werkzeugfallenden Umformteil mannigfaltige Ursachen, sowohl in Bezug auf einen Absolutwert der Abweichung als auch auf die Streuung der Abweichung über mehrere Umformteile hinweg. Die genannten Maß- und Formabweichungen sind überwiegend die Folge einer elastischen Rückfederung des Umformteils nach dem Öffnen des Werkzeugs und/oder nach der Entnahme des Werkstücks aus demselben. Dabei ist allgemein bekannt, dass die elastische Rückfederung des Umformteils erhebliche Kosten im Rahmen der Werkzeugherstellung verursacht. Nicht unerhebliche Anteile der Gesamtkosten der Werkzeugherstellung müssen aufgewendet werden, um das grundsätzlich funktionsfähige Umformwerkzeug im Rahmen der Werkzeugkorrektur zur Kompensation der rückfederungsbedingten geometrischen Abweichungen des Umformteils anzupassen.

Zur Anpassung der Umformwerkzeuge existieren unterschiedliche Korrektur- bzw. Kompensationsstrategien im Stand der Technik. Diese zielen - ausgehend von einem grundsätzlich funktionsfähigen Umformwerkzeug - darauf ab, Maß- und Formabweichungen des Umformteil nach der betreffenden Formoperation mittels einer Anpassung der das Umformteil der betreffenden Formoperation abbildenden Werkzeuggeometrie zu beseitigen, so dass am Ende des mehrstufigen Formprozesses eine toleranzgerechte Zielgeometrie des Umformteils erreicht wird. Die Zielgeometrie wird im Rahmen dieser Anmeldung auch als "Nullgeometrie" des Werkstücks bezeichnet. Insbesondere folgende Definitionen sollen im Rahmen dieser Anmeldung gelten:
Unter "Nullgeometrie" soll diejenige Geometrie des Werkstücks verstanden werden, die man in der betreffenden Formoperation des mehrstufigen Formprozesses zu erreichen gedenkt. Ein Umformwerkzeug, das auf einer CAD-Sollgeometrie des herzustellenden Werkstücks (d.h. die Nullgeometrie) modelliert wird, wird auch als "Nullwerkzeug" bezeichnet. In einem solchen (nicht kompensierten) Werkzeug sind die Werkzeug-Nullgeometrie und die Werkstück-Nullgeometrie identisch. Unter "Korrekturgeometrie" ist eine korrigierte, also vereinfacht ausgedrückt eine zum Ausgleich der elastischen Rückfederung "überbogene" Werkzeuggeometrie zu verstehen. Die Korrekturgeometrie kann auch als "Kompensationsgeometrie" bezeichnet werden. Die Kompensationsgeometrie weicht zwingend von der in der betreffenden Formoperation zu erreichenden Nullgeometrie ab, da nach dem Öffnen des Werkzeugs und/oder der Entnahme des Werkstücks aus demselben eine elastische Rückfederung des Werkstücks zu verzeichnen ist. Mit "Rückfederungsgeometrie" wird die nach dem Öffnen des Werkzeugs und/oder nach der Entnahme des Werkstücks aus demselben sich ergebende Werkstückgeometrie bezeichnet. Die "Rückfederungsgeometrie" kann auch als (elastische rückgefederte) Ist-Geometrie bezeichnet werden. Die Rückfederungsgeometrie des Werkstücks soll jedenfalls nach der letzten Formoperation des mehrstufigen Formprozesses der angestrebten Nullgeometrie entsprechen. Vereinfacht ausgedrückt sollte eine Korrekturstrategie so beschaffen sein, dass durch eine Ermittlung rückfederungs-kompensierter Wirkgeometrien der Umformwerkzeuge die Herstellung eines Umformteils in Nullgeometrie ermöglicht wird. Dabei kann ein Umformwerkzeug, dessen Wirkgeometrie entsprechend angepasst ist, auch als "kompensiertes Werkzeug" oder "korrigiertes Werkzeug" bezeichnet werden.

Im Stand der Technik sind unterschiedlichste simulationsgestützte Kompensationsstrategien für Umformwerkzeuge in mehrstufigen Formprozessen beschrieben.

Beispielsweise wird in dem Fachbeitrag: K. Roll, T. Lemke, K. Wiegand: "Possibilities and Strategies for Simulations and Compensation for Springback", AIP Conference Proceedings, vol. 778. Melville, NY: American Institute of Physics, 2005, Seite 295/302, ein Überblick über mehrere simulationsgestützte Kompensationsstrategien gegeben. Dabei wird die Empfehlung ausgesprochen, dass geometrische Abweichungen des Werkstücks von der Nullgeometrie grundsätzlich durch eine Kompensation in der hierfür als ursächlich identifizierten Formoperation ausgeglichen werden sollen. Hierzu ergänzend wird auf einen mit dem vorgenannten Fachartikel korrespondierenden Tagungsbeitrag derselben Autorenschaft verwiesen (LS-DYNA Anwenderforum, Bamberg 2004: "Simulationgsgestützte Kompensation der Rückfederung").

Andererseits ist aus dem Fachartikel: A. Birkert et al.: "Optimization of the process robustness of the stamping of complex body parts with regard to dimensional accuracy", IOP Conference Series: Materials Science and Engineering 418 (2018) 012107, bekannt, dass eine instabile Positionierung des Werkstücks am bzw. im Werkzeug maßgeblichen Einfluss auf die Robustheit und damit die Wiederholgenauigkeit mehrstufiger Formprozesse ausüben kann. Dabei wurde gezeigt, dass eine verbesserte Positionierung des Werkstücks - neben weiteren dort benannten Faktoren - eine Verminderung der maßlichen Streuung der Umforteile bewirken kann.

Der Einfluss der Positionierung des Werkstücks in Bezug auf das Werkzeug wird bei im Stand der Technik bekannten Kompensationsstrategien nicht in allgemeiner Form berücksichtigt. Im Stand der Technik ist lediglich ein als Drawshell-Strategie bezeichneter Ansatz allgemein bekannt, der jedoch auf spezielle Werkzeuge, nämlich Beschneidwerkzeuge, beschränkt ist. Dieser Ansatz sieht unter anderem vor, dass ein im Hinblick auf die Positionierung des Werkstücks angepasstes Beschneidwerkzeug keine darüber hinausgehende Anpassung zur Verringerung der maßlichen Abweichungen des Werkstücks zwischen Nullgeometrie und Rückfederungsgeometrie erfahren muss. Hierzu wird auf das Fachbuch: A. Birkert, S. Haage, M. Straub: "Umformtechnische Herstellung komplexer Karosserieteile - Auslegung von Ziehanlagen", Springer Vieweg-Verlag (2013), Seite 413 verwiesen.

Aus dem Fachbeitrag: Gianfranco Ruggiero et al.: "The Challenge of Compensation: The Use of the Draw-Shell Method", FormingWorld, 11. Oktober 2017, Seiten 1-5, XP055718006, sind Anwendungsbeispiele der besagten Drawshell-Strategie bekannt.

Weitere Beispiele und Hinweise zur praktischen Anwendung der Drawshell-Strategie sind bekannt aus "Springback R7 Update Advanced Training", AutoForm, 19. Januar 2017, XP055898950.

### AUFGABE UND LÖSUNG

Vor diesem Hintergrund liegt der Erfindung die Aufgabe zugrunde, ein Verfahren der eingangs genannten Art bereitzustellen, das eine möglichst allgemeingültige Anwendbarkeit auf unterschiedliche mehrstufige Formprozesse und die Herstellung von Umformwerkzeugen zur Verwendung in solchen mehrstufigen Formprozessen ermöglicht, wobei die herzustellenden Umformwerkzeuge so beschaffen sind, dass die damit hergestellten Umformteile möglichst maßhaltig sind und der mehrstufige Formprozess gleichzeitig möglichst robust ist.

Zur Lösung dieser Aufgabe stellt die Erfindung ein Verfahren mit den Merkmalen des Anspruchs 1 bereit. Weiterhin wird ein Verfahren mit den Merkmalen des Anspruchs 9 bereitgestellt. Vorteilhafte Weiterbildungen sind in den abhängigen Ansprüchen angegeben. Der Wortlaut sämtlicher Ansprüche wird durch Bezugnahme zum Inhalt der Beschreibung gemacht.

Das erfindungsgemäße Verfahren mit den Merkmalen des Anspruchs 1 umfasst die Schritte a) bis f) sowie die Schritte z) und z10). Dementsprechend berücksichtigt die erfindungsgemäße Lösung gegenüber im Stand der Technik bekannten simulationsgestützten Kompensationsstrategien nicht lediglich die geometrische Abweichung des Werkstücks von der angestrebten Nullgeometrie bei der Anpassung der Werkzeuge. Vielmehr wird hierzu zusätzlich der Werkstücklagefehler bei der Aufnahme des Werkstücks in bzw. an dem jeweiligen Werkzeug berücksichtigt und - neben der maßlichen Abweichung des Werkstücks von der Nullgeometrie - als ein wesentlicher Faktor bei der Anpassung der Wirkflächen der Werkzeuge herangezogen. Hierdurch ist das erfindungsgemäße Verfahren im Kontext unterschiedlichster mehrstufiger Formprozesse anwendbar, wodurch insbesondere auf eine anwendungsfallspezifische erfahrungsbasierte Anpassung der Werkzeuge weitestgehend oder gar vollständig verzichtet werden kann. Dabei erlauben die mit dem erfindungsgemäßen Verfahren ermittelten Wirkgeometrien eine möglichst maßhaltige Herstellung des betreffenden Formteils zum einen und zum anderen wird gleichzeitig eine verbesserte Robustheit und damit Wiederholgenauigkeit des mehrstufigen Formprozesses ermöglicht.

Der Schritt a) sieht ein Simulieren einer ersten Formoperation des mehrstufigen Formprozesses vor. Bei dieser Simulation wird ein virtuelles Werkstück, das das reale Umformteil repräsentiert, mittels eines virtuellen Werkzeugs, das ein reales Umformwerkzeug des mehrstufigen Formprozesses repräsentiert, umformtechnisch bearbeitet. Hierbei wird das Werkstück beim Einlegen in das erste Werkzeug wenigstens abschnittsweise an einer Wirkfläche aufgenommen und hiernach durch Einwirkung der Wirkfläche umgeformt. Die virtuelle Wirkfläche des ersten Werkzeugs kann eine reale Wirkgeometrie des betreffenden Umformwerkzeugs repräsentieren und basiert in der Regel auf CAD-Nulldaten des Werkstücks. Neben der Simulation des eigentlichen Umformens umfasst der Schritt a) zudem eine Ermittlung der elastisch rückgefederten Rückfederungsgeometrie des Werkstücks, die wie eingangs definiert auch als Ist-Geometrie bezeichnet werden kann. Die Rückfederungsgeometrie kann nach einem virtuellen Öffnen des Werkzeugs und/oder einer Entnahme des umgeformten Werkstücks aus dem Werkzeug vorliegen. Dabei bezieht sich die Rückfederungsgeometrie vorzugsweise auf einen von externen Kräften wenigstens im Wesentlichen, vorzugsweise vollständig, freien Zustand des Werkstücks, wobei ein Einfluss der Schwerkraft auf sich ergebende Deformationen des Werkstücks berücksichtigt sein kann. Das Simulieren gemäß Schritt a) umfasst demnach eine computergestützte Berechnung einer umgeformten und elastisch rückgefederten Konfiguration des Werkstücks, wobei diese Konfiguration im Kontext von Schritt a) auch als erste Rückfederungsgeometrie bezeichnet wird. Zur Durchführung des Schritts a) geeignete computergestützte Berechnungsmethoden sind im Stand der Technik als solche grundsätzlich bekannt und bedürfen daher keiner näheren Beschreibung. Zu nennen sind in erster Linie, aber nicht ausschließlich, Finite-Elemente-Methoden.

Der Schritt b) sieht ein Anpassen wenigstens eines weiteren Werkzeugs zur Minimierung eines Werkstücklagefehlers beim Einlegen des rückgefederten Werkstücks in das genannte weitere Werkzeug vor. Das wenigstens eine weitere Werkzeug ist zur Verwendung in einer der ersten Formoperation nachfolgenden weiteren Formoperation des mehrstufigen Formprozesses vorgesehen und repräsentiert dementsprechend ein weiteres reales Umformwerkzeug. Alternativ kann es sich bei dem weiteren Werkzeug auch um ein kombiniertes Umform- und Schneidwerkzeug handeln, dass einer Formoperation in Form einer kombinierten Form- und Schneidoperation zugeordnet ist. Entsprechendes gilt für die Wirkfläche des wenigstens einen weiteren Werkzeugs, das demnach eine Wirkgeometrie des weiteren Umformwerkzeugs repräsentiert. Diese Wirkfläche des wenigstens einen weiteren Werkzeugs wird, beispielsweise ausgehend von einer Nullgeometrie, zur verbesserten Aufnahme des nach der ersten Formoperation vorliegenden rückgefederten Werkstücks angepasst. Diese Anpassung zielt auf eine Minimierung eines Werkstücklagefehlers bei der Aufnahme der Rückfederungsgeometrie an der Wirkfläche des wenigstens einen weiteren Werkzeugs ab. Unter "Werkstücklagefehler" ist im Rahmen dieser Anmeldung ein Maß für eine geometrische Abweichung zwischen einer zu einem gewissen Zeitpunkt des mehrstufigen Formprozesses vorliegenden Rückfederungsgeometrie des Werkstücks und den zur Aufnahme dieser Rückfederungsgeometrie vorgesehenen Abschnitten einer Wirkfläche eines betreffenden Werkzeugs zu verstehen. Dieses Maß bezieht sich auf einen an der Wirkfläche aufgenommenen Zustand der Rückfederungsgeometrie und kann eine skalare oder vektorielle Größe bzw. Feldgröße sein. Liegt ein Werkstücklagefehler in hinreichendem Umfang vor, kann dies dazu führen, dass das Werkstück instabil in bzw. an dem Werkzeug aufgenommen ist. Diese instabile Lage kann die Robustheit und damit die Wiederholgenauigkeit des mehrstufigen Formprozesses beeinträchtigen. Der Werkstücklagefehler kann beispielsweise in Form eines Vektorfelds ermittelt werden, dessen Vektoren sich - in Bezug auf einen in bzw. an dem Werkzeug aufgenommenen Zustand des Werkstücks - zwischen der Wirkfläche und der Rückfederungsgeometrie erstrecken. Alternativ kann auch ein Vektorfeld, welches eine Abweichung zwischen der Null- und der Rückfederungsgeometrie nach der vorangegangenen Formoperation beschreibt, zur Bestimmung des Werkstücklagefehlers verwendet werden. Zur Minimierung des Werkstücklagefehlers kann die Wirkfläche des weiteren Werkzeugs dann unter Verwendung des zuvor ermittelten Vektorfelds in Richtung der Rückfederungsgeometrie angenähert werden. Vereinfacht ausgedrückt wird hierbei die Wirkfläche - im Unterschied zu einer üblichen Rückfederungs-Kompensation - nicht etwa entgegen einer Rückfederungsrichtung "überbogen", sondern stattdessen in Richtung der Rückfederung nachgeführt oder "aufgebogen". Im Rahmen dieser Anmeldung meint "Minimierung" nicht zwingend eine Optimierung bis zur Erreichung eines lokalen oder globalen Minimums. Stattdessen umfasst der Begriff "Minimierung" bereits eine einfache Reduktion.

Der Schritt c) sieht ein Simulieren der oben - in Zusammenhang mit Schritt b) - bereits genannten weiteren Formoperation des mehrstufigen Formprozesses unter Verwendung des zuvor in Schritt b) angepassten weiteren Werkzeugs vor. Dabei erfolgt die Simulation in einer dem Schritt a) entsprechenden Weise unter Verwendung einer hierfür geeigneten computergestützten Berechnungsmethode. Abweichend von Schritt a) liegt das Werkstück nun bereits in einer umgeformten und elastisch rückgefederten Konfiguration, nämlich der ersten Rückfederungsgeometrie, vor. Diese wird unter Verwendung der zuvor zur Minimierung des Werkstücklagefehlers angepassten Wirkfläche des wenigstens einen weiteren Werkzeugs aufgenommen und abermals elastisch-plastisch umgeformt. Die nach diesem Umformen vorliegende elastisch rückgefederte Konfiguration wird als weitere Rückfederungsgeometrie des Werkstücks bezeichnet.

Der Schritt d) sieht ein Ermitteln einer geometrischen Abweichung des Werkstücks vor. Diese Abweichung bezieht sich auf eine nach der wenigstens einen weiteren Formoperation angestrebte Nullgeometrie des Werkstücks. Die Abweichung wird mittels eines Abgleichs der nun vorliegenden Rückfederungsgeometrie mit der besagten Nullgeometrie ermittelt. Die Abweichungsgröße kann eine skalare oder vektorielle Größe bzw. Feldgröße sein. Vorzugsweise wird die Abweichungsgröße in Form eines Verschiebungsvektorfelds zwischen der angestrebten Nullgeometrie und der nun vorliegenden weiteren Rückfederungsgeometrie ermittelt.

Die Schritte e) und f) sehen ein Anpassen der Werkzeuge, nämlich des ersten Werkzeugs und des wenigstens einen weiteren Werkzeugs, zur Minimierung der zuvor ermittelten geometrischen Abweichung des Werkstücks vor. Dieses Anpassen erfolgt in Abhängigkeit der zuvor ermittelten Abweichungsgröße, beispielsweise des besagten Verschiebungsvektorfelds. Dabei wird das erste Werkzeug in Abhängigkeit der Abweichungsgröße ausgehend von dem in Schritt a) zugrunde gelegten Zustand angepasst. Mit anderen Worten erfolgt das Anpassen in Schritt e) ausgehend von der der Simulation der ersten Formoperation zugrunde gelegten Wirkfläche des ersten Werkzeugs. Sofern das erste Werkzeug als Nullwerkzeug konfiguriert war, erfolgt das Anpassen in Schritt e) ausgehend von der Nullgeometrie des ersten Werkzeugs. Hierbei wird die Wirkfläche des ersten Werkzeugs vereinfacht ausgedrückt "überbogen", was einem Abändern der Geometrie der Wirkfläche entgegen der Richtung der elastischen Rückfederung gleichkommt. Hierfür geeignete Methoden sind als solche grundsätzlich bekannt. Zu nennen sind beispielsweise die sogenannte Methode der inversen Vektoren sowie Modifikation der selbigen, wie sie in handelsüblicher FEM-Software zur Simulation von Blechumformprozessen verwendet wird. Des Weiteren zu nennen ist die sogenannte "strukturmechanische" Kompensationsmethode, wie sie in der DE 10 2016 212 933 A1 beschrieben ist. Daneben existiert eine als Comprehensive Compensation (CC) Methode bezeichnete Kompensationsmethode, die in der vorgenannten deutschen Offenlegungsschrift gewürdigt ist. Vor diesem Hintergrund erübrigt sich eine weitere Beschreibung der Details des Schritts e). Wichtig zu erkennen ist, dass das Anpassen des wenigstens einen weiteren Werkzeugs in Schritt f) ausgehend von der bereits zuvor im Schritt b) angepassten Wirkfläche des wenigstens einen weiteren Werkzeugs erfolgt. Demnach erfolgt das Anpassen zur Minimierung der geometrischen Abweichung zusätzlich zu der zuvor zur Minimierung des Werkstücklagefehlers erfolgten Anpassung der Wirkfläche des wenigstens einen weiteren Werkzeugs.

In dem Schritt z) werden die zuvor angepassten Wirkflächen der Werkzeuge als Kompensationsgeometrie des jeweils repräsentierten Umformwerkzeugs festgelegt.

In dem Schritt z10) wird das Umformwerkzeug und/oder das wenigstens eine weitere Umformwerkzeug unter Ausbildung der jeweils festgelegten rückfederungs-kompensierten Wirkgeometrie gefertigt.

In Ausgestaltung der Erfindung sind Schritte g) bis I) gemäß dem Wortlaut von Anspruch 2 vorgesehen, wobei deren Ausführung nach dem Schritt f) des Verfahrens nach Anspruch 1 erfolgen soll. Diese Ausgestaltung der Erfindung geht von der Überlegung aus, dass die Minimierung des Werkstücklagefehlers - je nach Art und Umfang der vorgenommenen Anpassungen an den Wirkflächen der betreffenden Werkzeuge - Einfluss auf die zu Ende des mehrstufigen Formprozesses vorliegende geometrische Abweichung des Werkstücks von der angestrebten Nullgeometrie haben wird. Demgegenüber geht das Verfahren nach Anspruch 1 davon aus, dass dieser Einfluss vernachlässigbar gering sein wird, was je nach den Gegebenheiten des zugrundeliegenden Anwendungsfalls tatsächlich der Fall sein kann.

Der unmittelbar auf den Schritt f) auszuführende Schritt g) sieht ein erneutes Simulieren der ersten Formoperation vor. Diese Simulation erfolgt in einer dem Schritt a) entsprechenden Weise, so dass zur Vermeidung von Wiederholungen auf die diesbezügliche Offenbarung im Zusammenhang mit den Ausführungen zu Anspruch 1 verwiesen wird. Allerdings erfolgt das Simulieren unter Verwendung der zuvor angepassten nun vorliegenden Wirkfläche des ersten Werkzeugs. Infolge der vorgenommenen Anpassung der Wirkfläche wird sich auch eine von der zuvor in Schritt a) ermittelten ersten Rückfederungsgeometrie unterschiedliche Rückfederungsgeometrie des Werkstücks einstellen. Diese Rückfederungsgeometrie kann auch als aktuelle oder nun vorliegende Rückfederungsgeometrie bezeichnet werden.

Der Schritt h) sieht ein erneutes und zusätzliches Anpassen des wenigstens einen weiteren Werkzeugs zur Minimierung des Werkstücklagefehlers vor. Diese Anpassung erfolgt in einer dem Schritt b) grundsätzlich entsprechenden Weise, so dass zur Vermeidung von Wiederholungen auf die diesbezügliche Offenbarung verwiesen wird. Das erneute Anpassen erfolgt in Abhängigkeit der nun vorliegenden Rückfederungsgeometrie des Werkstücks. Die Anpassung der Wirkfläche kann hierbei ausgehend von einer Nullgeometrie des wenigstens einen weiteren Werkzeugs oder ausgehend von einer infolge der bereits zuvor erfolgten Anpassungen ermittelten nun vorliegenden Kompensationsgeometrie des wenigstens einen weiteren Werkzeugs erfolgen.

Der Schritt i) sieht ein erneutes Simulieren der wenigstens einen weiteren Formoperation mit dem zuvor in Schritt h) erneut angepassten wenigstens einen weiteren Werkzeug vor. Dementsprechend wird dem Simulieren die nun vorliegende Wirkfläche des betreffenden Werkzeugs zugrunde gelegt. Das erneute Simulieren erfolgt in einer dem Schritt c) grundsätzlich entsprechenden Weise. Zur Vermeidung von Wiederholungen wird auf die diesbezügliche Offenbarung verwiesen, die auch in Bezug auf den Schritt i) gilt.

Der hierauf folgende Schritt j) sieht ein erneutes Ermitteln der geometrischen Abweichung des Werkstücks vor. Dabei wird die angestrebte Nullgeometrie des Werkstücks mit der nun vorliegenden Rückfederungsgeometrie des Werkstücks verglichen und in Abhängigkeit dieses Vergleichs eine nun vorliegende Abweichungsgröße ermittelt. Diese nun vorliegende Abweichungsgröße wird sich betragsmäßig von der in Schritt d) ermittelten Abweichungsgröße unterscheiden und vorzugsweise betragsmäßig geringer als diese sein.

Die Schritte k) und I) sehen ein erneutes Anpassen der Werkzeuge, nämlich des ersten Werkzeugs und des wenigstens einen weiteren Werkzeugs im Hinblick auf die nun vorliegende geometrische Abweichung des Werkstücks vor. Zur Vermeidung von Wiederholungen wird auf die Offenbarung im Zusammenhang mit dem Schritt e) verwiesen, die in Bezug auf den Schritt k) in entsprechender Weise gilt. Dabei erfolgt das Anpassen der Wirkfläche des wenigstens einen weiteren Werkzeugs in Schritt I) zusätzlich zu den zuvor erfolgten geometrischen Anpassungen der Wirkfläche.

Abschließend können die auf diese Weise erneut angepassten Wirkflächen als kompensierte Wirkgeometrie des jeweils repräsentierten Umformwerkzeugs in einer dem Schritt z) entsprechenden Weise festgelegt werden.

In weiterer Ausgestaltung der Erfindung ist vorgesehen, dass die Schritte g) bis l) iterativ, d.h. wiederholt, ausgeführt werden. Dabei soll die wiederholte Ausführung bis zum Erreichen einer vorgegebenen Anzahl an Iterationen und/oder bis zum Erreichen eines Konvergenzkriteriums ausgeführt werden. Das Konvergenzkriterium kann der Abweichungsgröße und/oder dem Werkstücklagefehler zugeordnet sein. Durch diese Ausgestaltung der Erfindung kann vorherrschenden Nichtlinearitäten in verbesserter Weise Rechnung getragen werden. Vereinfacht ausgedrückt werden die Wirkflächen der Werkzeuge unter Berücksichtigung der zuvor bereits erfolgten Anpassungen erneut und wiederholt so lange angepasst, bis ein zufriedenstellendes Ergebnis im Hinblick auf die Maßhaltigkeit des Werkstücks zu Ende des mehrstufigen Formprozesses erreicht ist.

In weiterer Ausgestaltung der Erfindung liegt dem Verfahren ein mehrstufiger Formprozess mit mehreren weiteren Formoperationen zugrunde. Demgegenüber sieht das Verfahren in seiner einfachst möglichen Ausprägung lediglich eine erste Formoperation und eine einzige weitere, nämlich eine zweite Formoperation und dementsprechend ein erstes und ein zweites Werkzeug vor. Bei der vorliegenden Ausgestaltung sind mehrere weitere Formoperationen, beispielsweise zwei, drei, vier, fünf oder eine beliebige Mehrzahl von Formoperationen vorgesehen, die in einer dem Schritt c) bzw. dem Schritt i) entsprechenden Weise simuliert werden. Dabei ist vorgesehen, dass das Anpassen und/oder erneute Anpassen des jeweiligen weiteren Werkzeugs zur Minimierung des jeweiligen Werkstücklagefehlers in Abhängigkeit der jeweils vorangegangenen Formoperationen, insbesondere ausschließlich in Abhängigkeit der jeweils unmittelbar vorangegangenen Formoperation, erfolgt. Das heißt die Wirkfläche des jeweiligen weiteren Werkzeugs wird in Abhängigkeit der zuvor ermittelten elastisch rückgefederten Rückfederungsgeometrie des Werkstücks ermittelt. Anders ausgedrückt werden die in dem mehrstufigen Formprozess verwendeten Werkzeuge sequenziell in Abhängigkeit der zuvor erfolgten Umformung angepasst, so dass bei jeder Formoperation eine möglichst optimale Aufnahme des Werkstücks und damit ein minimaler bzw. reduzierter Werkstücklagefehler an der betreffenden Wirkfläche gewährleistet ist.

In weiterer Ausgestaltung der Erfindung umfasst das Simulieren der Formoperationen ein computergestütztes Berechnen der jeweiligen elastisch rückgefederten Rückfederungsgeometrie des Werkstücks unter Anwendung einer nichtlinearen Finite-Elemente-Methode. Neben der jeweiligen Rückfederungsgeometrie können auch nicht näher bezeichnete Zwischenkonfigurationen des Werkstücks, wie sie beim Simulieren des eigentlichen Umformvorgangs auftreten können, ermittelt werden. Eine zugrunde gelegte Finite-Elemente-Formulierung kann explizit oder implizit formuliert sein. Zur Abbildung des bei der Umformung auftretenden elastisch-plastischen Deformationsverhaltens des Werkstücks ist ein nichtlineares elastisch-plastisches Materialmodell zugrunde gelegt.

In weiterer Ausgestaltung der Erfindung umfasst das Ermitteln und/oder erneute Ermitteln der geometrischen Abweichung des Werkstücks ein Ermitteln der vorliegenden Abweichungsgröße in Form eines Abweichungs-Vektorfelds. Das Abweichungs-Vektorfeld ist dabei durch Verschiebungsvektoren gebildet, die zwischen der nach der betreffenden Formoperation angestrebten Nullgeometrie des Werkstücks und der nach der betreffenden Formoperation tatsächlich vorliegenden elastisch rückgefederten Rückfederungsgeometrie des Werkstücks erstreckt sind. Die angestrebte Nullgeometrie kann beispielsweise in Form einer CAD-Sollgeometrie vorliegen, die durch einen entsprechenden Datensatz repräsentiert ist. Alternativ, sofern das Simulieren der Formoperationen eine Anwendung einer Finite-Elemente-Methode umfasst, kann die Nullgeometrie durch ein Finite-Elemente-Netz repräsentiert werden, das eine räumliche Diskretisierung des Werkstücks in der angestrebten Nullgeometrie darstellt. Dementsprechend kann die Rückfederungsgeometrie in Form eines deformierten Finite-Elemente-Netzes vorliegen. In diesem Fall sind die Verschiebungsvektoren zwischen ein- und demselben Knoten der beiden Finite-Elemente-Netze erstreckt.

In weiterer Ausgestaltung der Erfindung umfasst das Anpassen und/oder erneute Anpassen der Wirkflächen zur Minimierung der geometrischen Abweichung ein Ermitteln einer Korrekturgeometrie der Wirkfläche des jeweiligen Werkzeugs in Abhängigkeit des besagten Abweichungs-Vektorfelds. Wie eingangs erwähnt, kann die Korrekturgeometrie auch als Kompensationsgeometrie bezeichnet werden. Diese Korrekturgeometrie kann in Bezug auf eine Nullwirkfläche des jeweiligen Werkzeugs oder in Bezug auf eine bereits vorliegende angepasste Wirkfläche des jeweiligen Werkzeugs ermittelt werden. Geeignete Methoden zum Ermitteln der Korrekturgeometrie sind als solche grundsätzlich bekannt, wobei insbesondere die Methode der inversen Vektoren, die sogenannte Comprehensive Compensation(CC)-Methode sowie die in der Offenlegungsschrift DE 10 2016 212 933 A1 beschriebene "strukturmechanische" Methode zu nennen sind. Die auf diese Weise ermittelte Korrekturgeometrie der Wirkfläche stellt vereinfacht ausgedrückt eine entgegen der Richtung der elastischen Rückfederung "überbogene" Wirkflächengeometrie dar. Diese überbogene Geometrie kann in Bezug auf das Nullwerkzeug, d.h. die Nullwirkfläche, oder in Bezug auf einen bereits vorliegenden kompensierten Zustand des Werkzeugs, d.h. eine bereits vorliegende angepasste Wirkfläche, ermittelt werden.

In weiterer Ausgestaltung der Erfindung umfasst das Anpassen und/oder erneute Anpassen der Wirkfläche des wenigstens einen weiteren Werkzeugs zur Minimieren des Werkstücklagefehlers unter anderem ein Ermitteln des vorliegenden Werkstücklagefehlers in Form eines Fehler-Vektorfelds. Dabei ist das Fehler-Vektorfeld durch Vektoren gebildet, die zwischen der vorliegenden und gegebenenfalls bereits angepassten Wirkfläche des Werkzeugs und einer aktuell vorliegenden elastisch rückgefederten Rückfederungsgeometrie des Werkstücks erstreckt sind. Das Fehler-Vektorfeld kann in einem Zustand ermittelt werden, in dem das Werkstück in seiner aktuell vorliegenden Rückfederungsgeometrie an der Wirkfläche des im Hinblick auf die Minimierung des Werkstücklagefehlers anzupassenden Werkzeugs aufgenommen ist. Die Vektoren können beispielsweise ausgehend von der Wirkfläche in deren Normalenrichtung auf die Rückfederungsgeometrie erstreckt sein oder umgekehrt. Alternativ kann das Fehler-Vektorfeld durch Vektoren gebildet sein, die zwischen der Nullgeometrie und der aktuell vorliegenden Rückfederungsgeometrie erstreckt sind. Liegt das Fehler-Vektorfeld vor, wird die Wirkfläche vereinfacht ausgedrückt in Richtung der elastischen Rückfederung der Rückfederungsgeometrie nachgeführt. Auf diese Weise kann eine an die Rückfederung angenäherte Wirkfläche ermittelt werden. Demnach wird die Wirkfläche zur Minimierung des Werkstücklagefehlers - anders als bei der Minimierung der geometrischen Abweichung - nicht etwa "überbogen", sondern stattdessen "aufgebogen".

Zur Lösung der eingangs genannten Aufgabe stellt die Erfindung zudem ein Verfahren mit den Merkmalen des Anspruchs 9 bereit. Das erfindungsgemäße Verfahren sieht gemäß dem Wortlaut des Anspruchs 9 die Schritte a1) bis h1) sowie die Schritte z1) und z10) vor. Das Verfahren mit den Merkmalen des Anspruchs 9 sieht im Vergleich zu dem Verfahren mit den Merkmalen des Anspruchs 1 eine alternative Ausgestaltung insoweit vor, als - vereinfacht ausgedrückt - zur Minimierung des Werkstücklagefehlers nicht etwa das das Werkstück aufnehmende Werkzeug, sondern das in der Abfolge vorangegangene Werkzeug dementsprechend angepasst wird. Dabei ist das Verfahren mit den Merkmalen des Anspruchs 9 grundsätzlich durch die gleichen Vorteile gegenüber dem Stand der Technik gekennzeichnet wie das Verfahren mit den Merkmalen des Anspruchs 1, so dass zur Vermeidung von Wiederholungen auf die diesbezügliche Offenbarung im Zusammenhang mit dem Verfahren nach Anspruch 1 verwiesen wird.

Der Schritt a1) sieht ein Simulieren einer ersten Formoperation der Abfolge vor. Die Ausführung des Schritts a1) erfolgt dabei in einer dem Schritt a) des Verfahrens nach Anspruch 1 entsprechenden Weise. Zur Vermeidung von Wiederholungen wird daher auf die diesbezügliche Offenbarung verwiesen, die in entsprechender Weise auch vorliegend gilt.

Der Schritt b1) sieht ein Ermitteln eines Werkstücklagefehlers vor. Der Werkstücklagefehler beschreibt auch im Rahmen des Verfahrens nach Anspruch 9 ein Maß für eine geometrische Abweichung zwischen der vorliegenden Rückfederungsgeometrie des Werkstücks und den zur Aufnahme dieser Rückfederungsgeometrie vorgesehenen Abschnitten der Wirkfläche eines Werkzeugs. Auch hier bezieht sich dieses Maß auf einen an der Wirkfläche aufgenommenen Zustand der vorliegenden Rückfederungsgeometrie, wobei das Maß bzw. der Werkstücklagefehler eine skalare oder vektorielle Größe und/oder Feldgröße sein kann. Das Ermitteln des Werkstücklagefehlers kann entsprechend den diesbezüglichen Merkmalen des Anspruchs 8 ausgestaltet sein, so dass zur Vermeidung von Wiederholungen auf die diesbezügliche Offenbarung verwiesen wird.

Der auf das Ermitteln des Werkstücklagefehlers folgende Schritt c1) sieht ein Anpassen des ersten Werkzeugs zur Minimierung des Werkstücklagefehlers in der auf die erste Formoperation folgenden Formoperation vor. Im Unterschied zu dem Verfahren mit den Merkmalen des Anspruchs 1 sieht dieses Anpassen zur Minimierung des Werkstücklagefehlers nicht etwa ein "Aufbiegen" der Wirkfläche des in der Abfolge des mehrstufigen Formprozesses folgenden Werkzeugs vor. Stattdessen wird das in der Abfolge vorangegangene Werkzeug, hier im Speziellen das erste Werkzeug, in Abhängigkeit des ermittelten Werkstücklagefehlers "überbogen". Durch ein solches Anpassen des ersten Werkzeugs wird eine in Art und/oder Umfang geänderte elastische Rückfederung des Werkstücks erreicht, so dass in der nachfolgenden Formoperation ein verringerter Werkstücklagefehler und damit eine verbesserte Aufnahme des Werkstücks erreicht werden. Sofern der Werkstücklagefehler in Form eines Vektorfeldes ermittelt wird, kann das Anpassen des ersten Werkzeugs beispielsweise nach der Methode der inversen Vektoren, der Comprehensive Compensation(CC) Methode oder gemäß der in der Offenlegungsschrift DE 10 2016 212 933 A1 beschriebenen Kompensationsmethode ausgeführt werden.

Der hierauf folgende Schritt d1) sieht ein erneutes Simulieren der ersten Formoperation vor. Dieses Simulieren erfolgt in einer dem Schritt a1) entsprechenden Weise, wobei das zuvor in Schritt c1) zur Minimierung des Werkstücklagefehlers angepasste Werkzeug verwendet wird.

Der hierauf folgende Schritt e1) sieht ein Simulieren wenigstens der einen weiteren Formoperation der Abfolge vor. Hierbei wird das Werkstück mit seiner nach dem erneuten Simulieren der ersten Formoperation nun vorliegenden Rückfederungsgeometrie an der Wirkfläche des wenigstens einen weiteren Werkzeugs aufgenommen und elastisch-plastisch umgeformt. Aufgrund des zuvor erfolgten Anpassens des ersten Werkzeugs zur Minimierung des Werkstücklagefehlers wird das Werkstück nun in verbesserter Weise, d.h. mit verringertem Werkstücklagefehler, an der Wirkfläche des wenigstens einen weiteren Werkzeugs aufgenommen. Die Wirkfläche des wenigstens einen weiteren Werkzeugs liegt dabei vorzugsweise in einer Nullgeometrie vor. Das Simulieren gemäß Schritt e1) sieht zudem ein Ermitteln der nach der wenigstens einen weiteren Formoperation vorliegenden elastisch rückgefederten Rückfederungsgeometrie des Werkstücks vor. Zu weiteren Details des Simulierens gemäß Schritt e1) wird zur Vermeidung von Wiederholungen auf die mit dem Schritt a1) in Zusammenhang stehende Offenbarung verwiesen.

Der hierauf folgende Schritt f1) sieht ein Ermitteln einer geometrischen Abweichung des Werkstücks vor und wird in einer dem Schritt d) des Verfahrens nach Anspruch 1 grundsätzlich entsprechenden Weise ausgeführt. Zur Vermeidung von Wiederholungen wird auf die diesbezügliche Offenbarung verwiesen.

Die hierauf folgenden Schritte g1) und h1) sehen ein Anpassen der Werkzeuge, nämlich des ersten Werkzeugs und des wenigstens einen weiteren Werkzeugs, zur Minimierung der geometrischen Abweichung vor. In dem Schritt g1) wird das erste Werkzeug dabei zusätzlich zu der bereits zuvor im Hinblick auf die Minimierung des Werkstücklagefehlers erfolgten Anpassung erneut bzw. zusätzlich angepasst. Das wenigstens eine weitere Werkzeug wird demgegenüber vorzugsweise ausgehend von einer Nullgeometrie seiner Wirkfläche angepasst. Vereinfacht ausgedrückt werden die Werkzeuge in den Schritten g1) und h1) jeweils in Abhängigkeit der zuvor ermittelten Abweichungsgröße "überbogen". Sofern die Abweichungsgröße in Form eines Verschiebungs- bzw. Abweichungs-Vektorfelds ermittelt wird, kann das jeweilige Anpassen beispielsweise unter Verwendung der Methode der inversen Vektoren, der Comprehensive Compensation(CC) Methode oder der bereits mehrfach erwähnten in der Offenlegungsschrift DE 10 2016 212 933 A1 gelehrten Kompensationsmethode erfolgen.

In dem hierauf folgenden Schritt z1) werden die zuvor angepassten Wirkflächen der Werkzeuge als rückfederungs-kompensierte Wirkgeometrien des jeweils repräsentierten Umformwerkzeugs festgelegt. Dies erfolgt in einer dem Schritt z) des Verfahrens nach Anspruch 1 entsprechenden Weise.

In dem Schritt z10) wird das Umformwerkzeug und/oder das wenigstens eine weitere Umformwerkzeug unter Ausbildung der jeweils festgelegten rückfederungs-kompensierten Wirkgeometrie gefertigt.

Es versteht sich, dass einzelne Aspekte des Verfahrens nach Anspruch 9 in einer dem Verfahren nach Anspruch 1 entsprechenden Weise ausgeführt oder umgesetzt werden können. Dies gilt auch im Hinblick auf vorteilhafte Ausgestaltungen, so dass zur Vermeidung von Wiederholungen auf die mit den Ansprüchen 2 bis 8 in Verbindung stehende Offenbarung verwiesen wird, die auch auf das Verfahren nach Anspruch 9 übertragbar ist. Demnach kann auch das Verfahren nach Anspruch 9 insbesondere zur Berücksichtigung vorherrschender Nichtlinearitäten iterativ ausgestaltet sein und dementsprechend ein wiederholtes bzw. erneutes Kompensieren der Wirkflächen vorsehen.

Die Offenbarung bezieht sich zudem auf ein Verfahren zur Herstellung eines Umformwerkzeugs. Das herzustellende Umformwerkzeug ist zur Herstellung eines Umformteils mittels einer Formoperation vorgesehen und kann beispielsweise zur Verwendung in einer ziehtechnischen Umformoperation oder einer Nachformoperation vorgesehen sein. Dementsprechend weist das Umformwerkzeug eine Wirkgeometrie zum Aufnehmen und/oder Umformen des Umformteils auf. Bei dem Verfahren wird zunächst die Wirkgeometrie des Umformwerkzeugs gemäß einem Verfahren nach der vorstehenden Beschreibung ermittelt. Hiernach wird das Umformwerkzeug unter Ausbildung der ermittelten Wirkgeometrie gefertigt.

Die Erfindung bezieht sich zudem auf ein Verfahren zur Herstellung eines Umformteils, bei dem das Umformteil unter Einwirkung eines gemäß dem vorbeschriebenen Verfahren zur Herstellung eines Umformwerkzeugs hergestellten Umformwerkzeugs umgeformt wird.

Die Fähigkeit zur Ausführung der erfindungsgemäßen Verfahren und deren Ausgestaltungen kann in Form zusätzlicher Programmteile, Programmmodule und/oder in Form einer Programmänderung einer bestehenden Simulationssoftware implementiert werden. Daher betrifft ein weiterer Aspekt der vorliegenden Offenbarung ein Computerprogrammprodukt, das insbesondere auf einem computerlesbaren Medium gespeichert oder als Signal verwirklicht ist, wobei das Computerprogrammprodukt - wenn es in einen Speicher eines geeigneten Computers geladen und von dem Computer ausgeführt ist - bewirkt, dass der Computer ein Verfahren gemäß der Erfindung und/oder einer Ausgestaltung der Erfindung ausführt.

### KURZBESCHREIBUNG DER ZEICHNUNGEN

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt eine schematisch vereinfachte Darstellung zur Verdeutlichung eines im Stand der Technik bekannten Verfahrens zur Ermittlung rückfederungs-kompensierter Wirkflächen von Umformwerkzeugen,
- Fig. 2 in: einer der Fig. 1 entsprechenden Darstellungsweise ein weiteres im Stand der Technik bekanntes Verfahren gleichen Zwecks,
- Fig. 3: eine schematisch vereinfachte Darstellung zur Verdeutlichung einer Ausführungsform eines erfindungsgemäßen Verfahrens zur Ermittlung rückfederungs-kompensierter Wirkgeometrien für Umformwerkzeuge,
- Fig. 4a, 4b: eine weitere Ausführungsform eines erfindungsgemäßen Verfahrens zur Werkzeugkompensation ähnlich dem Verfahren nach Fig. 3, wobei Nichtlinearitäten berücksichtigt werden,
- Fig. 5: eine weitere Ausführungsform eines erfindungsgemäßen Verfahrens zur Werkzeugkompensation ähnlich dem Verfahren nach Fig. 3, wobei ein zugrunde liegender mehrstufiger Umformprozess mehrere weitere Formoperationen aufweist,
- Fig. 6: eine weitere Ausführungsform eines erfindungsgemäßen Verfahrens zur Werkzeugkompensation,
- Fig. 7a, 7b: eine weitere Ausführungsform eines erfindungsgemäßen Verfahrens zur Werkzeugkompensation, wobei ein zugrunde liegender mehrstufiger Formprozess ähnlich wie bei dem Verfahren nach Fig. 5 mehrere weitere Formoperationen aufweist,
- Fig. 8: eine schematisch stark vereinfachte perspektivische Ansicht eines mittels einer Abfolge mehrerer aufeinanderfolgender Formoperationen herzustellenden Umformteils, wobei ein entlang einer Schnittlinie A-A durch das Umformteil erstreckter Schnitt schematisch angedeutet ist,
- Fig. 9: in schematisch vereinfachter Blockdiagrammdarstellung einen mehrstufigen Formprozess mit mehreren aufeinanderfolgenden Form- und Messoperationen, der zur Herstellung des Umformteils nach Fig. 8 vorgesehen ist,
- Fig. 10: eine schematische Übersichtsdarstellung in Bezug auf den mehrstufigen Formprozess nach Fig. 9 zur Verdeutlichung von Aspekten einer Ausführungsform eines erfindungsgemäßen Verfahrens zur Werkzeugkompensation und
- Fig. 11: eine weitere Übersichtsdarstellung entsprechend Fig. 10 zur Verdeutlichung weiterer Verfahrensaspekte.

### DETAILLIERTE BESCHREIBUNG DER AUSFÜHRUNGSBEISPIELE

Im Folgenden werden einige Ausführungsbeispiele zur Erläuterung von Möglichkeiten zur praktischen Umsetzung der Erfindung erläutert. Die dargelegten erfindungsgemäßen Verfahren dienen einer computergestützten, simulationsbasierten Ermittlung rückfederungs-kompensierter Wirkgeometrien für Umformwerkzeuge, die zur Herstellung eines Umformteils mittels einer Abfolge mehrerer aufeinanderfolgender Formoperationen vorgesehen sind. Diese Abfolge von Formoperationen kann auch als mehrstufiger Formprozess bezeichnet werden. Vereinfacht ausgedrückt können die erfindungsgemäßen Verfahren auch als Verfahren zur (computergestützten, simulationsbasierten) Werkzeugkompensation bezeichnet werden. In diesem Zusammenhang ist unter einer Werkzeugkompensation eine Anpassung der Wirkflächen virtueller Werkzeuge zu verstehen, wobei die Anpassung einer Kompensation zwangsläufig vorhandener elastischer Rückfederungen des herzustellenden Umformteils dienen soll. Die auf diese Weise kompensierten Wirkflächen der virtuellen Werkzeuge dienen als Vorgabe zur Herstellung bzw. Spezifikation entsprechender realer Umformwerkzeuge bzw. der Wirkgeometrien dieser Umformwerkzeuge.

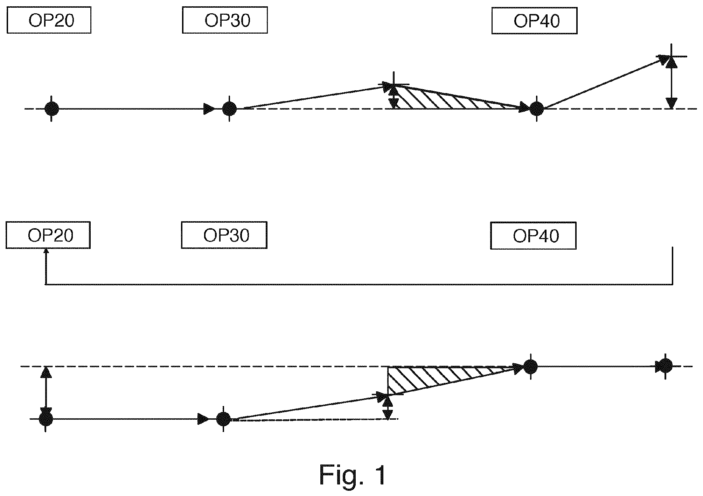

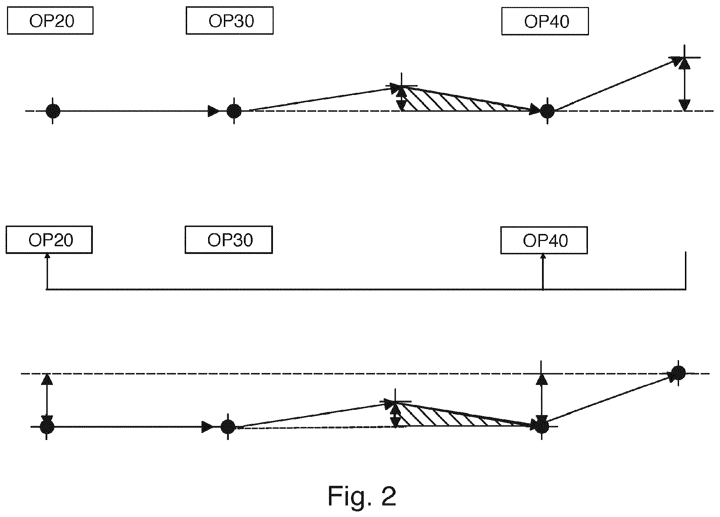

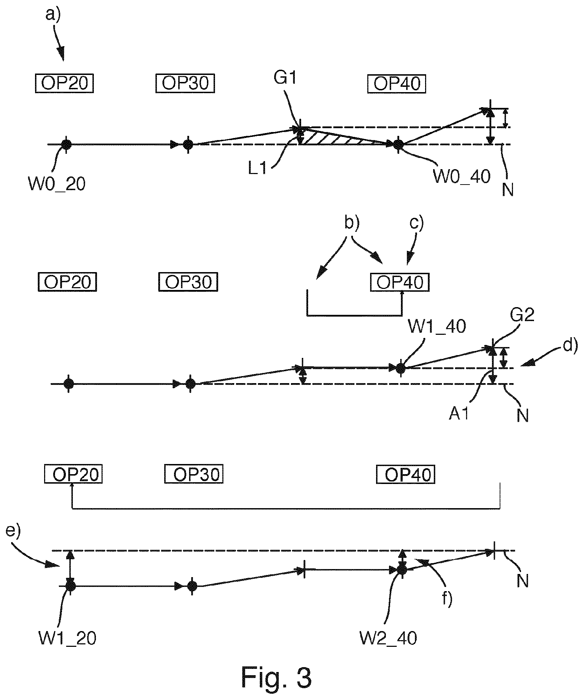

Zur Verdeutlichung der Vorteile und Merkmale der erfindungsgemäßen Verfahren wird nachfolgend zunächst auf zwei bereits im Stand der Technik bekannte Verfahren zur simulationsbasierten Werkzeugkompensation eingegangen, die schematisch anhand der Fig. 1 und 2 dargestellt sind. Zunächst wird die den Fig. 1 und 2 zugrunde liegende schematische Darstellungsweise näher erläutert, da diese Darstellungsweise auch den mit den erfindungsgemäßen Verfahren in Verbindung stehenden Fig. 3 bis 7b zugrunde liegt.

Die den besagten Figuren zugrunde liegende Darstellungsweise ist grundsätzlich von links nach rechts und von oben nach unten zu lesen und verdeutlicht in stark vereinfachter Weise den jeweiligen Verfahrensablauf vor dem Hintergrund eines mehrstufigen Formprozesses. Den Fig. 1 und 2 ist hierbei ein Formprozess mit insgesamt zwei Formoperationen OP20 und OP40 und einer lasertechnischen Beschneidoperation OP30 zugrunde gelegt. Die Formoperation OP20 ist vorliegend eine ziehtechnische Umformoperation und die Formoperation OP40 ist eine Nachformoperation, in der das zuvor ziehtechnisch umgeformte und beschnittene Werkstück weiter in Richtung einer angestrebten Zielkonfiguration umgeformt wird. In den schematischen Darstellungen beziehen sich die kreuzförmigen Zeichenelemente auf eine vorliegende Geometrie des Werkstücks, wobei diese jeweils in Bezug auf eine strichliert eingezeichnete Nulllinie dargestellt ist. Diese Nulllinie repräsentiert eine nach der jeweiligen Formoperation angestrebte Zielgeometrie des Werkstücks, die auch als Nullgeometrie bezeichnet werden kann. Die kreisförmigen Zeichenelemente beziehen sich auf eine Geometrie des in der jeweiligen Formoperation zu verwendenden (virtuellen) Werkzeugs. Diese Werkzeuge repräsentieren jeweils ein in der betreffenden (realen) Formoperation zu verwendendes reales Umformwerkzeug. Dabei beziehen sich die kreisförmigen Zeichenelemente auf die Wirkflächengeometrien der Werkzeuge. Die jeweils vorliegende Wirkflächengeometrie, kurz: Wirkfläche, ist in den schematischen Darstellungen jeweils in Bezug auf eine Werkzeug-Nullgeometrie dargestellt, die wiederum durch die strichliert eingezeichnete Bezugslinie verdeutlicht ist. Alles Weitere wird anhand der nachfolgenden Beschreibung deutlich.

So sieht das im Stand der Technik bekannte Verfahren nach Fig. 1 vereinfacht ausgedrückt zunächst eine computergestützte Simulation des mehrstufigen Formprozesses in einem unkompensierten Zustand der jeweiligen Werkzeuge vor. Unkompensiert meint, dass die Werkzeuge jeweils in ihrer Nullgeometrie vorliegen, so dass die Werkzeuge auch als "Nullwerkzeuge" bezeichnet werden können. Diese "Nullwerkzeuge" basieren auf einer CAD-Sollgeometrie des herzustellenden Werkstücks, so dass die (nicht kompensierten) Wirkflächen der Werkzeuge geometrisch identisch mit der jeweils angestrebten Nullgeometrie des Werkstücks sind. Genauer wird zunächst die erste Formoperation OP20 simuliert, wobei das virtuelle Werkstück mittels eines ersten, der ersten Formoperation zugrunde liegenden Werkzeugs elastisch-plastisch umgeformt wird. Jedenfalls im geschlossenen Zustand des ersten Werkzeugs liegt keine elastische Rückfederung des Werkstücks vor. Diese stellt sich erst nach dem Öffnen des Werkzeugs und/oder der Entnahme des Werkstücks aus demselben ein. Die elastische Rückfederung des Werkstücks ist anhand der zwischen den Formoperationen OP20 und OP40 in Bezug auf die strichlierte Bezugslinie nach oben verschobenen Positionierung des kreuzförmigen Zeichenelements verdeutlicht. Ausgehend von diesem Zustand wird das Werkstück in der Formoperation OP40 mittels eines weiteren Werkzeugs nachgeformt. Beim Schließen dieses Werkzeugs verformt sich das Werkstück ausgehend von der elastisch rückgefederten Konfiguration zwangsläufig elastisch oder elastisch-plastisch. Hierbei wird eine elastische Energie in das Werkstück eingebracht, die durch das schraffierte Dreieck in der Darstellung der Fig. 1 repräsentiert ist. Nach Simulieren der Formoperation OP40 und einer Entnahme aus dem betreffenden Werkzeug der OP 40 nimmt das Werkstück eine weitere Konfiguration ein, die rückfederungsbedingt von der angestrebten Nullgeometrie am Ende des mehrstufigen Formprozesses abweicht. Diese unerwünschte geometrische Abweichung ist durch den nach der Formoperation OP40 eingezeichneten vertikal erstreckten Pfeil zwischen dem kreuzförmigen Zeichenelement und der strichlierten Bezugslinie der Nullgeometrie verdeutlicht.

Zur Kompensation dieser geometrischen Abweichungen sieht das bekannte Verfahren nach Fig. 1 ein als solches grundsätzlich bekanntes "Überbiegen" des ersten Werkzeugs der OP20 vor. Dies ist durch die nun von der strichlierten Bezugslinie nach unten abweichende Positionierung der betreffenden Wirkflächen (kreisförmige Zeichenelemente) verdeutlicht. Bei dieser Kompensationsstrategie ergibt sich jedoch beim Einlegen des Werkstücks in das Werkzeug der OP40 eine nicht optimale Werkstücklage. Diese nicht optimale Werkstücklage führt zu einer ungewollten elastischen Deformation des Werkstücks beim Schließen des Werkzeugs, so dass die nicht optimale Werkstücklage ebenfalls durch das schraffierte Dreieck repräsentiert ist. Denn das Werkzeug der OP40 bleibt bei dieser Kompensationsstrategie unberücksichtigt, so dass es nach wie vor in seiner Nullgeometrie vorliegt. Zwar wird mit der anhand Fig. 1 verdeutlichten bekannten Kompensationsstrategie zu Ende des Formprozesses ein maßhaltiges Werkstück erreicht. Allerdings findet die zuvor erwähnte nicht optimale Werkstücklage bei Einlegen des Werkstücks in das weitere Werkzeug der OP40 keine Berücksichtigung. Durch die rückfederungsbedingt nicht optimale Werkstücklage in der OP40 kann jedoch die Robustheit und Wiederholgenauigkeit des Formprozesses beeinträchtigt werden. Zudem unterschlägt die Darstellung der Fig. 1 und 2, dass die nicht optimale Werkstücklage sehr wohl Einfluss auf die geometrische Abweichung des Werkstücks nach der OP40 haben kann. Dies aufgrund vorherrschender Nichtlinearitäten, die zum Zwecke der einfacheren Verdeutlichung in den Fig. 1 und 2 vernachlässigt wurden.

Eine weitere im Stand der Technik bekannte Kompensationsstrategie ist anhand Fig. 2 verdeutlicht. Auch bei diesem Verfahren wird zunächst eine rechnergestützte Simulation des mehrstufigen Formprozesses unter Verwendung von Nullwerkzeugen ausgeführt. Die hieraus resultierende geometrische Abweichung des Werkstücks zu Ende des Formprozesses wird - wie auch in dem Verfahren nach Fig. 1 - zur Kompensation des Werkzeugs der OP20 verwendet. Zusätzlich wird auch das Werkzeug der OP40 in Abhängigkeit der zuvor ermittelten geometrischen Abweichung kompensiert, was durch die von der strichlierten Bezugslinie abweichende Positionierung der Wirkfläche der OP40 (dortiges kreisförmiges Zeichenelement) verdeutlicht ist. Auch hier ergibt sich aufgrund der vorliegenden elastischen Rückfederung des Werkstücks nach der OP20 eine nicht optimale Werkstücklage in der OP40. Demnach liegt auch bei diesem bekannten Verfahren weder vor noch nach der Kompensation der Werkzeuge der Formoperationen OP20 und OP40 eine optimale Werkstücklage vor, was wiederum durch das schraffierte Dreieck verdeutlicht ist.

Im Vergleich zu dem bekannten Verfahren nach Fig. 1 wäre das bekannte Verfahren nach Fig. 2 für den hier dargestellten mehrstufigen Formprozess mit den vorliegenden Abweichungen vergleichsweise vorteilhafter. Denn die Werkstücklage in der OP40 wird durch die Kompensation der geometrischen Abweichungen bei den Verfahren nach Fig. 2 nach Art und Umfang nicht beeinflusst, was anhand der gleichbleibenden Gestalt des schraffierten Dreiecks erkennbar ist. Davon ausgehend, dass eine Veränderung der Werkstücklage - aufgrund vorherrschender Nichtlinearitäten, die in den Fig. 1 und 2 vernachlässigt sind - die Maßhaltigkeit des Werkstücks zu Ende des Formprozesses beeinflusst, ist das bekannte Verfahren nach Fig. 2 demnach vergleichsweise vorteilhafter.

Dennoch ist den beiden bekannten Kompensationsstrategien gemeinsam, dass die Kompensation lediglich im Hinblick auf die zu Ende des Formprozesses vorliegende Geometrie des Werkstücks erfolgt. Die Lage des elastisch rückgefederten Werkstücks bei der Aufnahme in bzw. an den jeweiligen Werkzeugen der Formoperationen bleibt hingegen unberücksichtigt.

Die Erfindung geht demgegenüber von der Überlegung aus, dass die Vernachlässigung der Werkstücklage bei der Werkzeugkompensation zu einer Verschlechterung der Stabilität des mehrstufigen Formprozesses hinsichtlich der sich ergebenden elastischen Rückfederung des Werkstücks führen kann. Zudem geht die Erfindung von der Überlegung aus, dass die Vernachlässigung der Werkstücklage bei der Werkzeugkompensation - je nach vorherrschendem Einfluss der Werkstücklage auf die sich ergebenden geometrischen Abweichungen zu Ende des Formprozesses - dazu führen kann, dass ein anforderungsgerechtes Kompensationsergebnis nicht erreicht werden kann. Das heißt selbst nach einem möglichen mehrfachen iterativen Durchlaufen der Kompensationsstrategien nach den Fig. 1 und 2 gewährleistet die auf diese Weise ermittelten Kompensationsgeometrien bzw. kompensierten Werkzeuge nicht, dass ein maßhaltiges Umformteil hergestellt werden kann.

Vor diesem Hintergrund stellt die Erfindung die anhand der Fig. 3 bis 7b verdeutlichten Verfahren zur Werkzeugkompensation bereit.

Bei diesen Verfahren wird anders als im Stand der Technik nach dem Fig. 1 und 2 auch die Werkstücklage in den einzelnen Formoperationen berücksichtigt. Es hat sich gezeigt, dass die erfindungsgemäßen Verfahren und ihre Ausgestaltungen eine möglichst allgemeingültige Anwendbarkeit auf unterschiedlich ausgestaltete mehrstufige Formprozesse aufweisen und die Herstellung von Umformwerkzeugen zur Verwendung in solchen mehrstufigen Formprozesses ermöglichen, wobei diese Umformwerkzeuge so beschaffen sind, dass die damit hergestellten Umformteile möglichst maßhaltig sind und der mehrstufige Formprozess gleichzeitig möglichst robust ist.

Dem anhand Fig. 3 verdeutlichten Beispiels eines erfindungsgemäßen Verfahrens zur Werkzeugkompensation liegt ein mehrstufiger Formprozess mit einer Abfolge mehrerer aufeinanderfolgender Formoperationen OP20 und OP40 und einer Operation OP30. Die Formoperation OP20 ist eine ziehtechnische Umformoperation, die Operation OP30 ist vorliegend eine lasertechnische Beschneidoperation und die Formoperation OP40 ist vorliegend eine Nachformoperation, in der das zuvor ziehtechnisch umgeformte und beschnittene Werkstück nachgeformt wird.

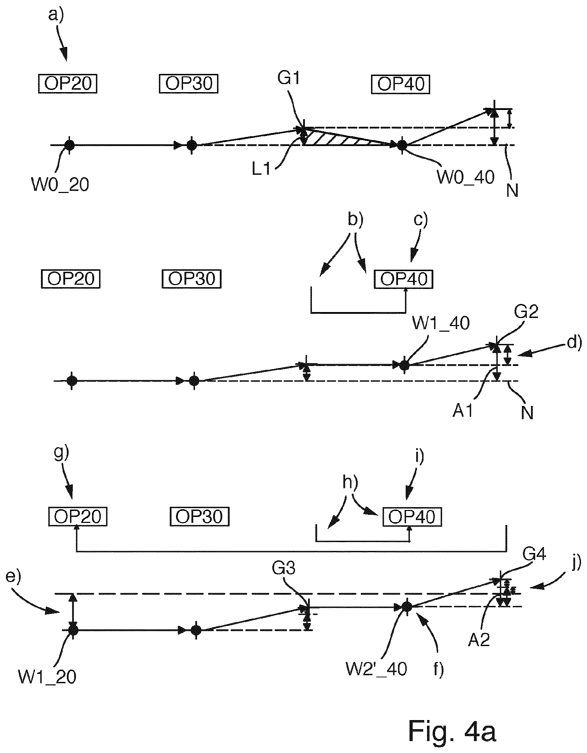

Dabei ist wichtig anzumerken, dass der hier zugrunde gelegte Formprozess ebenso wie die den folgenden Fig. 4a bis 7b zugrunde gelegten mehrstufigen Formprozesse rein exemplarisch zu verstehen ist. Die erläuterten erfindungsgemäßen Verfahren sind unabhängig von den hier exemplarisch zugrunde gelegten Formprozessen insbesondere auch auf andere Formprozesse mit anderen und/oder zusätzlichen umformtechnischen Formoperationen anwendbar.

Insbesondere ist die hier vorgesehene Operation OP30 (Beschneiden) nicht zwingend erforderlich und wird insoweit in der folgenden Erläuterung vernachlässigt.

Das Verfahren sieht in einem Schritt a) zunächst ein Simulieren der hier ersten Formoperation OP20 vor. Dabei wird ein das herzustellende Umformteil repräsentierendes (virtuelles) Werkstück an einer Wirkfläche WO_20 eines ersten Werkzeugs, das ein erstes Umformwerkzeug repräsentiert, aufgenommen elastisch-plastisch umgeformt. Im geschlossenen Zustand des ersten Werkzeugs fallen Werkzeug- und Werkstückgeometrie zwangsläufig zusammen. Nach Öffnen des ersten Werkzeugs ergibt sich demgegenüber eine elastisch rückgefederte erste Rückfederungsgeometrie G1 des Werkstücks.

Das Simulieren der Formoperation OP20 und die hiervon umfasste Ermittlung der elastisch rückgefederten Rückfederungsgeometrie G1 erfolgt vorliegend computergestützt und simulationsbasiert unter der Verwendung einer nichtlinearen Finite-Elemente-Methode. Solche Methoden sind im Bereich der virtuellen Auslegung von Bauteilen und/oder Methodenplanung als solche hinlänglich bekannt, so dass auf diesbezügliche Details nicht weiter eingegangen wird.

Anders als die Darstellung der Fig. 3 eventuell vermuten lässt, wird hiernach nicht etwa unmittelbar die Formoperation OP40 simuliert. Vielmehr wird stattdessen zunächst das der Formoperation OP40 zugeordnete Werkzeug zur Minimierung des sich aufgrund der elastischen Rückfederung des Werkstücks ergebenden Werkstücklagefehlers L1 angepasst. Der Werkstücklagefehler L1 ergibt sich vorliegend aus der geometrischen Abweichung zwischen der ersten Rückfederungsgeometrie G1 und der zur Aufnahme der ersten Rückfederungsgeometrie G1 vorgesehenen Wirkfläche WO_40 des Werkzeugs der Formoperation OP40. Die Wirkfläche WO_40 repräsentiert vorliegend ein Nullwerkzeug, was durch die Positionierung auf der strichlierten Bezugslinie verdeutlicht sein soll. Das Anpassen b) des betreffenden Werkzeugs sieht nunmehr eine wenigstens abschnittsweise in Abhängigkeit der ersten Rückfederungsgeometrie G1 zur Minimierung des Werkstücklagefehlers L1 auszuführende Anpassung der Wirkfläche WO_40 vor. Diese Anpassung ist schematisch in der zweiten Zeile der Darstellung nach Fig. 3 verdeutlicht. Demgemäß liegt nun eine zur Minimierung des Werkstücklagefehlers angepasste Wirkfläche W1_40 vor, wobei die vorgenommene Anpassung durch die in Bezug auf die strichlierte Bezugslinie (Nullgeometrie des Werkzeugs) veränderte Position repräsentiert ist.

Vorliegend umfasst der Schritt b) (das Anpassen des wenigstens einen weiteren Werkzeugs) ein Ermitteln des vorliegenden Werkstücklagefehlers L1 in Form eines Fehler-Vektorfelds. Das nicht näher bezeichnete Fehler-Vektorfeld ist durch Vektoren gebildet, die - in Bezug auf einen Zustand, in dem das Werkstück an dem Werkzeug der OP40 aufgenommen ist - zwischen der Wirkfläche WO_40 und der elastisch rückgefederten Rückfederungsgeometrie G1 des Werkstücks erstreckt sind. Alternativ kann das Fehler-Vektorfeld von der Werkzeuggeometrie der vorhergehenden Formoperation zur Rückfederungsgeometrie nach derselben Formoperation erstreckt sein. In Abhängigkeit dieses Fehler-Vektorfelds wird die Wirkfläche WO_40 vereinfacht gesagt in Richtung der Rückfederungsgeometrie G1 "aufgebogen", so dass sich die angepasste bzw. an die Rückfederungsgeometrie G1 angenäherte Wirkfläche W1_40 ergibt.

Hiernach sieht das Verfahren in einem Schritt c) ein Simulieren der wenigstens einen weiteren Formoperation OP40 vor. Hierbei wird das Werkstück in der ersten Rückfederungsgeometrie G1 an der nun vorliegenden und zuvor angepassten Wirkfläche W1_40 aufgenommen und elastisch-plastisch umgeformt. Die Aufnahme des Werkstücks an der Wirkfläche W1_40 erfolgt hierbei aufgrund der zuvor erfolgten Anpassung zur Minimierung des Werkstücklagefehlers L1 in verbesserter, d.h. möglichst passgenauer Art und Weise, so dass sich eine stabile Aufnahme des Werkstücks an dem Werkzeug der OP40 ergibt. Das Simulieren c) der OP40 umfasst zudem ein Ermitteln der (nach dem Öffnen des betreffenden Werkzeugs) vorliegenden elastisch rückgefederten weiteren Rückfederungsgeometrie G2 des Werkstücks. Die Rückfederungsgeometrie G2 weicht vorliegend von der angestrebten Nullgeometrie N ab, was anhand Fig. 3 in der nach oben verschobenen Positionierung der Rückfederungsgeometrie G2 verdeutlicht ist.

Das Verfahren nach Fig. 3 sieht hiernach ein Ermitteln einer geometrischen Abweichung A1 des Werkstücks vor, wobei die nach der OP40 vorliegende Rückfederungsgeometrie G2 mit der angestrebten Nullgeometrie N verglichen und in Abhängigkeit dieses Vergleichs eine Abweichungsgröße ermittelt wird.

Das Ermitteln d) der geometrischen Abweichung A1 umfasst vorliegend ein Ermitteln der Abweichungsgröße in Form eines Abweichungs-Vektorfelds. Das Abweichungs-Vektorfeld ist dabei durch Verschiebungsvektoren gebildet, die zwischen der angestrebten Nullgeometrie N des Werkstücks und der vorliegenden Rückfederungsgeometrie G2 des Werkstücks erstreckt sind.

Hiernach sieht das Verfahren nach Fig. 3 ein Anpassen e) des der OP20 zugrunde liegenden ersten Werkzeugs und ein Anpassen f) des der OP40 zugrunde liegenden weiteren Werkzeugs vor. Genauer wird im Schritt e) die Wirkfläche WO_20 des ersten Werkzeugs in Abhängigkeit der geometrischen Abweichung A1 dahingehend "überbogen", dass sich eine angepasste Wirkfläche W1_20 ergibt. Die Wirkfläche WO_20 repräsentiert vorliegend eine Nullgeometrie des ersten Werkzeugs. Das korrespondierende kreisförmige Zeichenelement der Fig. 3 ist insoweit auf der besagten strichlierten Bezugslinie positioniert. Das Anpassen f) des weiteren Werkzeugs erfolgt in einer entsprechenden Weise, wobei die Wirkfläche des weiteren Werkzeugs in Abhängigkeit der Abweichung A1 zusätzlich bzw. unter Berücksichtigung der zuvor im Schritt b) erfolgten Anpassung zur Minimierung des Werkstücklagefehlers L1 vorgenommen wird. Vereinfacht ausgedrückt wird die bereits angepasste Wirkfläche W1_40 betragsmäßig um die ermittelte geometrische Abweichung A1 "überbogen". Hierdurch ergibt sich eine nun vorliegende, zusätzlich angepasste Wirkfläche W2_40 des Werkzeugs der Formoperation OP40.

Das Anpassen e) und das Anpassen f) der entsprechenden Wirkflächen zur Minimierung der geometrischen Abweichung A1 des Werkstücks umfasst vorliegend das Ermitteln einer nicht näher bezeichneten Korrekturgeometrie der betreffenden Wirkfläche in Abhängigkeit des zuvor im Schritt d) ermittelten Abweichungs-Vektorfelds zwischen Rückfederungsgeometrie G2 und Nullgeometrie N des Werkstücks. Die Korrekturgeometrie kann hierbei in Bezug auf eine Nullwirkfläche, so wie hier bei der Anpassung des Werkzeugs der OP20, oder in Bezug auf eine bereits vorliegend angepasste Wirkfläche, so wie hier die Wirkfläche W1_40, ermittelt werden. Hierfür geeignete Methoden sind im Stand der Technik als solche grundsätzlich bekannt, wobei insbesondere die Methode der inversen Vektoren, die Comprehensive Compensation (CC) Methode oder die in der Offenlegungsschrift DE 10 2016 212 933 A1 gelehrte Methode zu nennen sind. Vor diesem Hintergrund erübrigt sich eine Erläuterung weiterer Details der in den Schritten e) und f) vorzunehmenden Anpassungen der Wirkflächen.

Die auf diese Weise angepassten Wirkflächen W1_20 und W2_40 können hiernach als rückfederungs-kompensierte Wirkgeometrie des jeweils repräsentierten realen Umformwerkzeugs festgelegt werden. Das heißt bei der Herstellung eines solchen Umformwerkzeugs wird auf Grundlage der zuvor angepassten Wirkflächen W1_20 und W2_40 eine entsprechende geometrische Spezifikation des Umformwerkzeugs ermittelt und dessen Wirkgeometrie wird dementsprechend gefertigt.

Weitere Ausführungsformen erfindungsgemäßer Verfahren sind anhand der Fig. 4a bis 7b verdeutlicht. Die dort verdeutlichten Verfahren weisen hinsichtlich ihrer Merkmale und insbesondere der auszuführenden Schritte sowie deren Ausgestaltung Übereinstimmungen mit dem anhand Fig. 3 verdeutlichten Verfahren auf. Identische und/oder einander entsprechende Verfahrensmerkmale und/oder Verfahrensschritte sind insoweit mit identischen Bezugszeichen versehen. Zur Vermeidung von Wiederholungen werden identische und/oder entsprechende Verfahrensmerkmale und/oder Verfahrensschritte nicht bei jeder Ausführungsform gesondert erläutert. Vielmehr wird jeweils lediglich auf die wesentlichen Unterschiede der einzelnen Verfahren untereinander eingegangen. Im Hinblick auf übereinstimmende Verfahrensmerkmale und/oder Verfahrensschritte wird auf die mit dem Verfahren nach Fig. 3 in Zusammenhang stehende Offenbarung verwiesen.

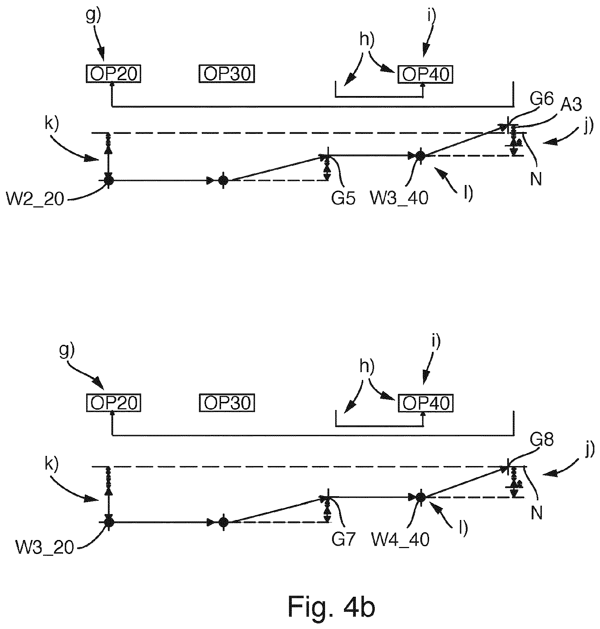

Das anhand der Fig. 4a und 4b verdeutlichte erfindungsgemäße Verfahren zur Werkzeugkompensation unterscheidet sich im Wesentlichen dahingehend von dem Verfahren nach Fig. 3, dass der Einfluss des Anpassens des wenigstens einen weiteren Werkzeugs zur Minimierung des Werkstücklagefehlers auf die sich zu Ende des Formprozesses ergebende geometrische Abweichung des Werkstücks berücksichtigt wird. Hierzu sieht das Verfahren weitere Schritte g) bis I) vor, die sich unmittelbar an den Schritt f), nämlich das Anpassen des wenigstens einen weiteren Werkzeugs der OP40, anschließen.

Dies vorweggeschickt sieht das Verfahren nach den Fig. 4a und 4b einen Schritt g) vor, bei dem die erste Formoperation OP20 in einer dem Schritt a) entsprechenden Weise simuliert wird. Dieser Simulation wird - im Unterschied zum Schritt a) - die zuvor angepasste nun vorliegende Wirkfläche W1_20 zugrunde gelegt. Aufgrund der vorgenommenen Anpassungen der Wirkfläche ergibt sich eine von der zuvor nach der OP20 ermittelten ersten Rückfederungsgeometrie G1 abweichende nun vorliegende Rückfederungsgeometrie G3 des Werkstücks, die auch als aktuelle Rückfederungsgeometrie bezeichnet werden kann. Hiernach sieht das Verfahren ein erneutes Anpassen h) des der OP40 zugrunde liegenden Werkzeugs vor, das in einer dem Schritt b) entsprechenden Weise ausgeführt wird. Das heißt bei dem erneuten Anpassen h) erfolgt die Kompensation der Wirkfläche des Werkzeugs der OP40 in Abhängigkeit der nun vorliegenden Rückfederungsgeometrie bzw. des nun vorliegenden nicht näher bezeichneten und zeichnerisch nicht dargestellten Werkstücklagefehlers. Das Anpassen h) erfolgt unter Berücksichtigung des zuvor erfolgten Anpassens f) bzw. zusätzlich zu diesem. Im Ergebnis wird eine erneut angepasste Wirkfläche W2'_40 ermittelt. Die erneut angepasste Wirkfläche W2'_40 unterscheidet sich von der Wirkfläche W2_40 (nach Schritt f)) durch die im Hinblick auf die Werkstücklage erfolgte Anpassung im Schritt h).

Hiernach sieht das Verfahren in einem Schritt i) ein erneutes Simulieren der OP40 vor. Diese Simulation erfolgt in einer dem Schritt c) entsprechenden Weise und unter Verwendung der zuvor ermittelten erneut bzw. zusätzlich angepassten Wirkfläche W2'_40.

Hiernach erfolgt in einem Schritt j) ein erneutes Ermitteln der nun vorliegenden geometrischen Abweichung A2 des Werkstücks in einer dem Schritt d) entsprechenden Weise. Demnach wird eine nun nach der OP40 vorliegende Rückfederungsgeometrie G4 mit der angestrebten Nullgeometrie N verglichen und in Abhängigkeit dieses Vergleichs eine nun vorliegende nicht näher bezeichnete Abweichungsgröße ermittelt. Die Abweichungsgröße wird auch hier in Form eines zeichnerisch nicht näher dargestellten Abweichungs-Vektorfelds ermittelt.

Hiernach erfolgt in einer dem Schritt e) bzw. dem Schritt f) entsprechenden Weise ein erneutes Anpassen k) des ersten Werkzeugs bzw. ein erneutes Anpassen l) des wenigstens weiteren Werkzeugs jeweils zur Minimierung der geometrischen Abweichung des Werkstücks von der Nullgeometrie N. Das heißt die entsprechenden Werkzeuge werden zur Kompensation der geometrischen Abweichung in einer dem Verfahren nach Fig. 3 entsprechenden Weise "überbogen".

Die auf diese Weise ermittelten Wirkflächen der Werkzeuge der OP20 und der OP40 können als rückfederungs-kompensierte Wirkgeometrie des jeweils repräsentierten realen Umformwerkzeugs festgelegt werden.

Alternativ hierzu kann - wie anhand Fig. 4b ersichtlich - ein wiederholtes, iteratives Ausführen der Verfahrensschritte g) bis I) vorgesehen sein. Vorliegend sind zwei weitere Iterationen vorgesehen, wobei die erste Iteration durch die erste Darstellungszeile der Fig. 4b und die zweite Iteration durch die zweite Darstellungszeile der Fig. 4b verdeutlicht sein soll. Im Rahmen der ersten Iteration wird beim erneuten Simulieren g) der OP20 die nun vorliegende elastisch rückgefederte Rückfederungsgeometrie G5 des Werkstücks ermittelt. Das der OP40 zugrunde liegende Werkzeug wird im Schritt h) erneut angepasst, so dass eine nun vorliegende Wirkfläche W3_40 (unter Berücksichtigung der zuvor erfolgten erneuten Anpassung im Schritt I)) ermittelt wird. Nach einem erneuten Simulieren i) der OP40 mit der nun vorliegenden Wirkfläche W3_40 ergibt sich die nun vorliegende Rückfederungsgeometrie G6. Durch einen Vergleich der Rückfederungsgeometrie G6 mit der angestrebten Nullgeometrie N im Schritt j) ergibt sich die nun vorliegende Abweichung A3. Hiernach erfolgt vorliegend ein weiterer Durchlauf der Schritte g) bis I) unter Berücksichtigung der nun vorliegenden Wirkfläche W3_20 des ersten Werkzeugs, wobei unter anderem die Rückfederungsgeometrien G7 und G8 sowie die erneut angepasste Wirkfläche W4_40 ermittelt werden. Anhand Fig. 4b soll verdeutlicht sein, dass nach dem zuvor beschriebenen wiederholten Durchlauf, d.h. einer weiteren Iteration (die auch als "Kompensationsschleife" bezeichnet werden kann), keine nennenswerte geometrische Abweichung des Werkstücks zu Ende des mehrstufigen Formprozesses vorliegt. Vielmehr nimmt das Werkstück die nach der OP40 angestrebte Nullgeometrie ein.

Die auf diese Weise ermittelten Wirkflächen W3_20 und W4_40 können als rückfederungs-kompensierte Wirkgeometrie des jeweils repräsentierten realen Umformwerkzeugs festgelegt werden.

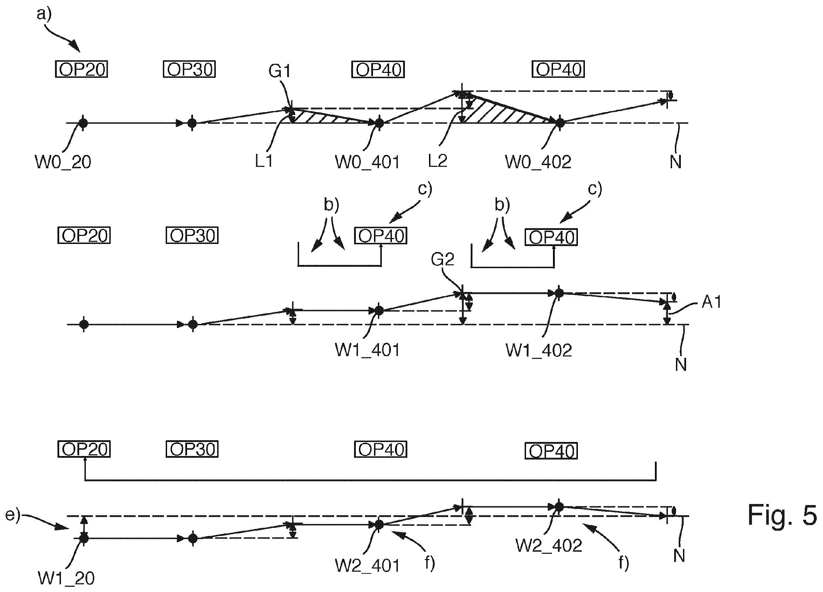

Die anhand Fig. 5 verdeutlichte Ausführungsform eines erfindungsgemäßen Verfahrens sieht im Unterschied zu den zuvor beschriebenen Verfahren mehrere weitere Formoperationen mit jeweils einem weiteren Werkzeug vor. Vorliegend sind anstelle einer Nachformoperation OP40 zwei Nachformoperationen OP40 vorgesehen. Dabei erfolgt das Anpassen und/oder erneute Anpassen des jeweiligen weiteren Werkzeugs zur Minimierung des jeweiligen Werkstücklagefehlers L1, L2 in Abhängigkeit der elastisch rückgefederten Rückfederungsgeometrie G1, G2 des Werkstücks, die unmittelbar nach dem Simulieren einer in der Abfolge unmittelbar vorangegangenen Formoperation vorliegt. Hierzu im Einzelnen:
Das Verfahren nach Fig. 5 sieht zunächst ein Simulieren a) der OP20 mit einer eine Nullwerkzeuggeometrie repräsentierenden Wirkfläche WO_20 vor. Hierbei wird die elastisch rückgefederte Rückfederungsgeometrie G1 des Werkstücks ermittelt. Ausgehend hiervon wird das der ersten Nachformoperation OP40 zugrunde liegende Werkzeug gemäß Schritt b) in Abhängigkeit des Werkstücklagefehlers L1 angepasst, so dass ausgehend von der Nullwerkzeuggeometrie WO_401 die zur Minimierung des Werkstücklagefehlers angepasste Wirkfläche W1_401 ermittelt wird. Hiernach wird im Schritt c) die erste Nachformoperation OP40 simuliert, wobei die nun vorliegende elastisch rückgefederte Rückfederungsgeometrie G2 des Werkstücks ermittelt wird. In Abhängigkeit der nach der ersten Nachformoperation OP40 vorliegenden Rückfederungsgeometrie G2 wird in einem weiteren Schritt b) das der zweiten Nachformoperation OP40 zugrunde liegende Werkzeug ausgehend von einer Nullwerkzeuggeometrie WO_402 unter Ermittlung einer angepassten Wirkfläche W1_402 angepasst. Hiernach wird in einem weiteren Schritt c) bzw. in einer dem vorherigen Schritt c) entsprechenden Art und Weise die zweite Nachformoperation OP40 unter Verwendung der angepassten Wirkfläche W1_402 simuliert und hiernach die sich ergebende geometrische Abweichung A1 des Werkstücks von der Nullgeometrie N ermittelt. Hiernach erfolgt wiederum die Kompensation des ersten Werkzeugs in Abhängigkeit der ermittelten geometrischen Abweichung A1 in einer dem Schritt e) entsprechenden Weise, wobei eine angepasste Wirkfläche W1_20 ermittelt wird. Auch die den beiden Nachformoperationen OP40 zugrunde liegenden Werkzeuge werden dementsprechend angepasst. Die Anpassung erfolgt jeweils in einem Schritt f) bzw. in einer dementsprechenden Art und Weise unter Ermittlung angepasster Wirkflächen W2_401 und W2_402.

Es versteht sich, dass auch das anhand Fig. 5 verdeutlichte Verfahren zur Berücksichtigung vorherrschender Nichtlinearitäten in einer dem anhand der Fig. 4a und 4b verdeutlichten Verfahren entsprechenden Weise iterativ ausgeführt und/oder ausgestaltet werden kann.

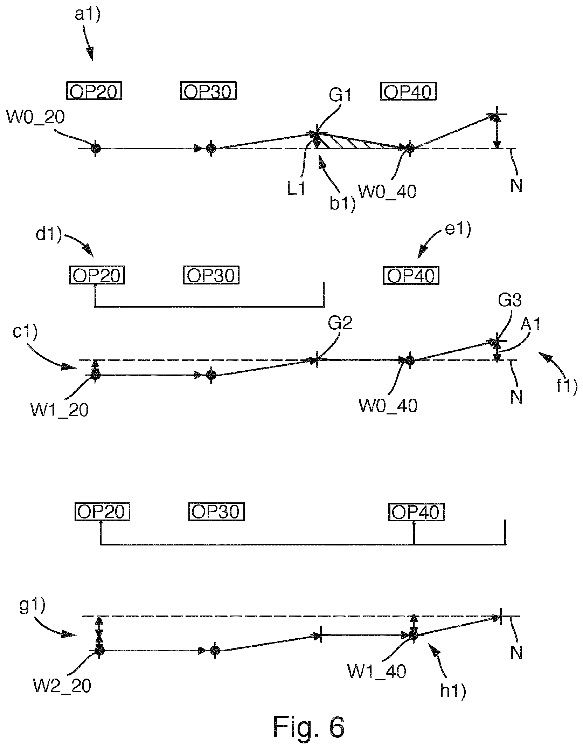

Das anhand Fig. 6 verdeutlichte erfindungsgemäße Verfahren zur Werkzeugkompensation unterscheidet sich im Wesentlichen dahingehend von den zuvor beschriebenen erfindungsgemäßen Verfahren, dass die Kompensation des Werkstücklagefehlers durch eine Anpassung der jeweils vorangegangenen Formoperation, hier der ersten Formoperation, erfolgt.

Dementsprechend sieht das Verfahren ein Simulieren a1) einer ersten Formoperation OP20 vor. Diese Simulation erfolgt mit einer durch eine Wirkfläche WO_20 repräsentierten Werkzeugnullgeometrie. Nach Öffnen des Werkzeugs der OP20 ergibt sich die elastisch rückgefederte Rückfederungsgeometrie G1, wobei auch hier die Operation OP30 (lasertechnischer Beschnitt) zur Erläuterung des grundsätzlichen Verfahrensablaufs vernachlässigt werden kann.

In einem Schritt b1) wird der resultierende Werkstücklagefehler L1 ermittelt. Der Werkstücklagefehler L1 wird in Form einer geometrischen Abweichung zwischen der Rückfederungsgeometrie G1 und der Wirkfläche WO_40 des der weiteren Formoperation OP40 zugrunde liegenden Werkzeugs ermittelt. Bezüglich der Details der Ermittlung des Werkstücklagefehlers L1 wird insbesondere auf die mit Fig. 3 im Zusammenhang stehende Offenbarung verwiesen.

Zur Minimierung des Werkstücklagefehlers wird nun nicht etwa das der OP40 zugrunde liegende Werkzeug angepasst. Vielmehr ist vorgesehen, dass hierzu das erste Werkzeug angepasst wird. Dies erfolgt in einem Schritt c1), wobei die Wirkfläche WO_20 des ersten Werkzeugs in Abhängigkeit des ermittelten Werkstücklagefehlers L1 wenigstens abschnittsweise zur Minimierung des Werkstücklagefehlers unter Ermittlung der angepassten Wirkfläche W1_20 angepasst wird. Diese Anpassung kommt vereinfacht ausgedrückt einem "Überbiegen" des ersten Werkzeugs gleich. Das heißt die Wirkfläche des ersten Werkzeugs wird zur Minimierung des Werkstücklagefehlers in der folgenden Formoperation entgegen der elastischen Rückfederung des Werkstücks in ihrer Form und/oder Gestalt verändert.

Hiernach wird in einem Schritt d1) die erste Formoperation OP20 erneut in einer dem Schritt a1) entsprechenden Weise und unter Verwendung der zuvor angepassten und nun vorliegenden Wirkfläche W1_20 simuliert. Hierbei ergibt sich die nun vorliegende Rückfederungsgeometrie G2 des Werkstücks. Aufgrund der zuvor erfolgten Anpassung stimmt die Rückfederungsgeometrie G2 vorliegend mit der nach der OP20 angestrebten Nullgeometrie überein. Insoweit ergibt sich eine verbesserte Aufnahme an der Wirkfläche WO_40 des der OP40 zugrunde liegenden Werkzeugs.

In einem Schritt e1) wird die weitere Formoperation OP40 in einer dem Schritt a1) bzw. d1) entsprechenden Weise simuliert, wobei eine hiernach vorliegende elastisch rückgefederte weitere Rückfederungsgeometrie G3 des Werkstücks ermittelt wird.

In einem Schritt f1) wird die nunmehr vorliegende elastisch rückgefederte Rückfederungsgeometrie G3 mit der nach der OP40 angestrebten Nullgeometrie N verglichen und in Abhängigkeit dieses Vergleichs eine geometrische Abweichung A1 in Form einer nicht näher bezeichneten skalaren oder vektoriellen Abweichungsgröße ermittelt.

Hiernach erfolgt ein Anpassen g1) des der OP20 zugrunde liegenden ersten Werkzeugs unter Berücksichtigung bzw. zusätzlich zu der zuvor gemäß dem Schritt c1) erfolgten Anpassung zur Minimierung des Werkstücklagefehlers. Hierbei wird eine erneut bzw. zusätzlich angepasste Wirkfläche W2_20 ermittelt. Dementsprechend wird in dem Schritt h1) das Werkzeug der OP40 kompensiert, wobei eine angepasste Wirkfläche W1_40 ermittelt wird.

Die auf diese Weise angepassten Wirkflächen W2_20 und W1_40 können hiernach in einem zeichnerisch nicht näher dargestellten Schritt z1) als Wirkgeometrie des jeweils repräsentierten realen Umformwerkzeugs festgelegt werden.

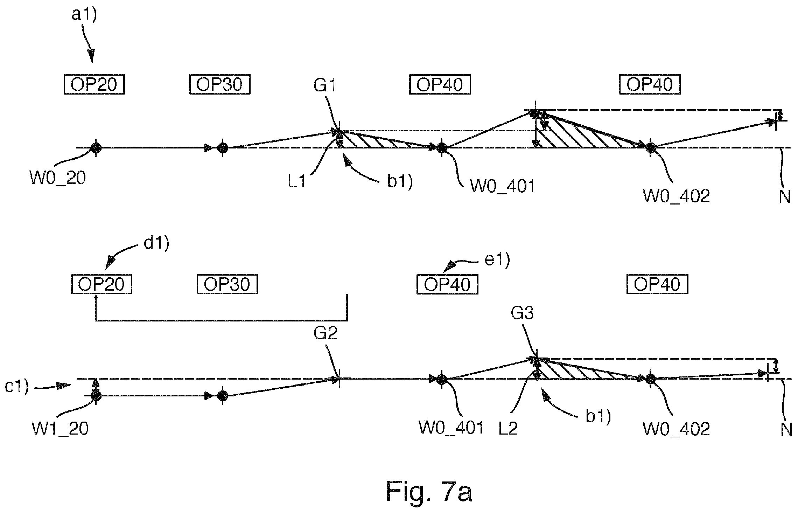

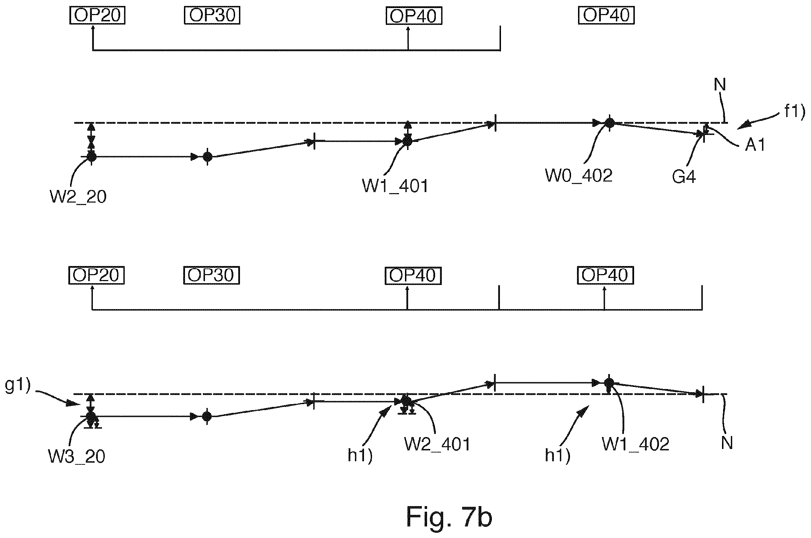

Das anhand der Fig. 7a und 7b verdeutlichte erfindungsgemäße Verfahren ähnelt dem Verfahren nach Fig. 6 insoweit, als auch hier eine Kompensation von Werkstücklagefehlern durch eine Korrektur der vorhergehenden Formoperation vorgesehen ist. Allerdings liegt dem anhand der Fig. 7a und 7b verdeutlichten Verfahren - wie bereits dem Verfahren nach Fig. 5 - ein mehrstufiger Formprozess mit zwei Formoperationen OP40, d.h. mit zwei Nachformoperationen, zugrunde. Nachfolgend werden lediglich die wesentlichen Unterschiede gegenüber dem zuvor anhand der Fig. 6 verdeutlichten Verfahren erläutert.

Die Schritte a1) bis e1) werden zunächst entsprechend dem Verfahren nach Fig. 6 ausgeführt (vgl. Fig. 7a). So liegt nach dem Simulieren e1) der ersten weiteren Formoperation OP40 eine Rückfederungsgeometrie G3 vor. Da nun eine weitere Nachformoperation OP40 vorgesehen ist, wird nicht etwa eine geometrische Abweichung des Werkstücks in Bezug auf die Nullgeometrie N ermittelt. Stattdessen wird in einer dem Schritt b1) entsprechenden Weise ein weiterer Werkstücklagefehler L2 ermittelt. Der weitere Werkstücklagefehler L2 bezieht sich auf das der zweiten Nachformoperation OP40 zugeordnete Werkzeug, das als Nullwerkzeug vorgesehen ist und insoweit eine Wirkfläche WO_402 aufweist.

Hiernach wird in einer dem Schritt c1) entsprechenden Weise zunächst das der ersten Formoperation OP20 zugrunde liegende Werkzeug angepasst. Das heißt die zuvor zur Kompensation des Werkstücklagefehlers L1 angepasste Wirkfläche W1_20 wird zusätzlich unter Ermittlung der Wirkfläche W2_20 angepasst (vgl. Fig. 7b, erste Zeile). Dementsprechend wird auch die Wirkfläche WO_401 des der ersten Nachformoperation OP40 zugrunde liegenden Werkzeugs zur Kompensation des Werkstücklagefehlers L2 angepasst. Hierbei wird die Wirkfläche W1_401 ermittelt.

Nach einem erneuten Simulieren der Formoperationen wird schlussendlich die nach der zweiten Nachformoperation OP40 vorliegende geometrische Abweichung A1 des Werkstücks durch einen Vergleich der nun vorliegenden elastisch rückgefederten Rückfederungsgeometrie G4 und der Nullgeometrie N in einer dem Schritt f1) entsprechenden Weise ermittelt. Hiernach erfolgt eine erneute Anpassung der Werkzeuge entsprechend den Schritten g1) in Bezug auf das der OP20 zugrunde liegende Werkzeug und h1) in Bezug auf den beiden Nachformoperationen OP40 zugrunde liegenden Werkzeuge.

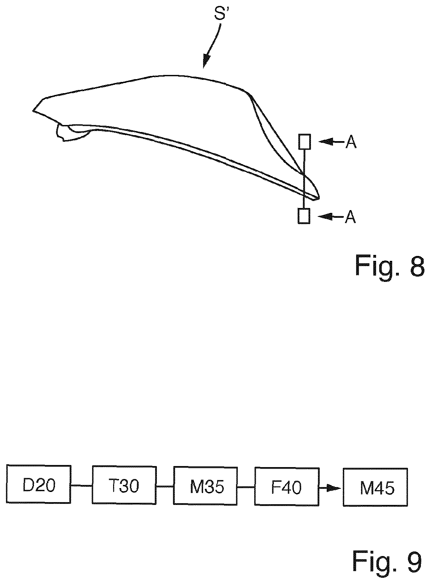

Anhand der Fig. 8 bis 11 sind weitere Aspekte der erfindungsgemäßen Verfahren verdeutlicht.

Fig. 8 zeigt ein Umformteil S' das mittels einer Abfolge mehrerer aufeinanderfolgender Formoperationen hergestellt ist. Das Umformteil S' ist vorliegend in Form eines geometrisch komplexen aus Stahlblech gefertigten Karosseriebauteils für einen Personenkraftwagen ausgebildet. Der zur Herstellung des Umformteils S' vorgesehene mehrstufige Umformprozess weist eine erste Formoperation D20 und eine weitere Formoperation F40 auf. Die Formoperation D20 umfasst eine ziehtechnische Umformung, kurz: ein Ziehen. Die Formoperation F40 umfasst ein Nachformen.

Fig. 9 zeigt ein schematisch stark vereinfachtes Flussdiagramm eines computergestützten simulationsbasierten Verfahrens, bei dem der besagte mehrstufige Formprozess zum Zwecke einer Werkzeugkompensation simuliert wird. Die dort ersichtlichen Schritte M35 und M45 bezeichnen jeweils eine noch näher zu beschreibende Ermittlung einer elastischen Rückfederung. Zudem ist eine Operation T30 vorgesehen, die vorliegend ein lasertechnisches Schneiden ist. Zum Zwecke der vereinfachten Darstellung des Verfahrens wird der Einfluss der Operation T30 nicht näher betrachtet.

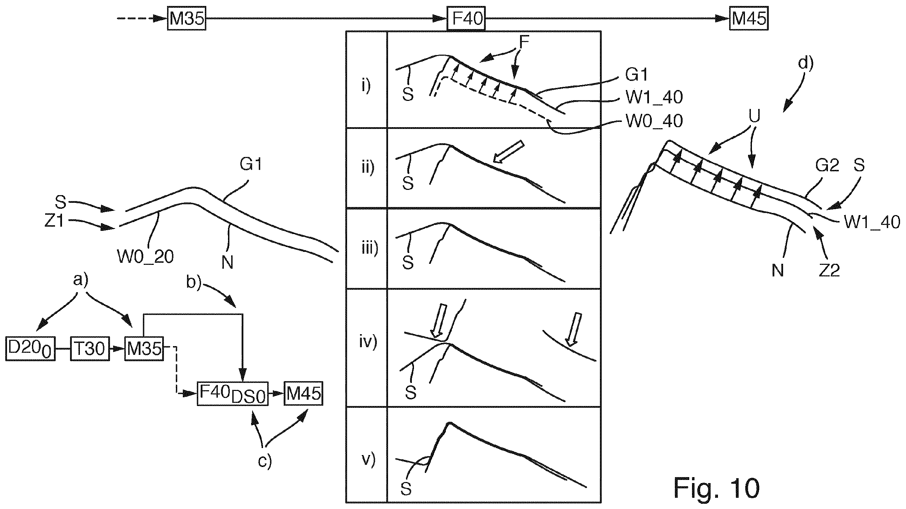

Anhand Fig. 10 ist verdeutlicht, dass bei dem Verfahren zunächst in einem Schritt a) das Ziehen D20 simuliert wird. Bei dieser Simulation wird ein Werkstück S an einem ersten Werkzeug Z1 aufgenommen und elastisch-plastisch umgeformt. Dabei repräsentiert das (virtuelle) Werkstück S das herzustellende Umformteil S'. Das erste Werkzeug Z1 repräsentiert ein reales ziehtechnisches Umformwerkzeug. Bei der Simulation des Ziehens D20 liegt das erste Werkzeug Z1 als Nullwerkzeug vor. Dessen Wirkfläche WO_20 repräsentiert somit eine Nullgeometrie des realen Umformwerkzeugs. Der Schritt a) umfasst zudem die bereits erwähnte Ermittlung M35 der Rückfederung des Werkstücks S nach dem Ziehen D20. In elastisch rückgefedertem Zustand nimmt das Werkstück S eine erste Rückfederungsgeometrie G1 ein.

Hiernach wird in einem Schritt b) ein dem Nachformen F40 zugrunde liegendes zweites Werkzeug Z2 zur Minimierung eines Werkstücklagefehlers angepasst. Diese Anpassung erfolgt vorliegend ausgehend von einer Nullgeometrie des zweiten Werkzeugs Z2, die durch eine Wirkfläche WO_40 repräsentiert wird. Hierzu wird vorliegend in dem Schritt b) der besagte Werkstücklagefehler in Form eines Fehler-Vektorfelds F ermittelt. Dieses anhand Fig. 10 ersichtliche Fehler-Vektorfeld F ist durch nicht näher bezeichnete Vektoren gebildet, die - in Bezug auf einen Zustand, in dem das Werkstück S an dem Werkzeug Z2 aufgenommen ist (vgl. Fig. 1, Teildarstellung i)) - zwischen der vorliegenden Wirkfläche WO_40 und der vorliegenden elastisch rückgefederten Rückfederungsgeometrie G1 erstreckt sind. In Abhängigkeit des Fehlervektorfelds F wird das Werkzeug Z2 in Richtung der Rückfederungsgeometrie G1 angenähert. Vereinfacht ausgedrückt wird die Wirkfläche WO_40 unter Verwendung des Fehler-Vektorfelds F in Richtung der Rückfederungsgeometrie G1 verschoben. Alternativ kann davon gesprochen werden, dass die Wirkfläche WO_40 in Richtung der vorliegenden elastischen Rückfederung "aufgebogen" wird.

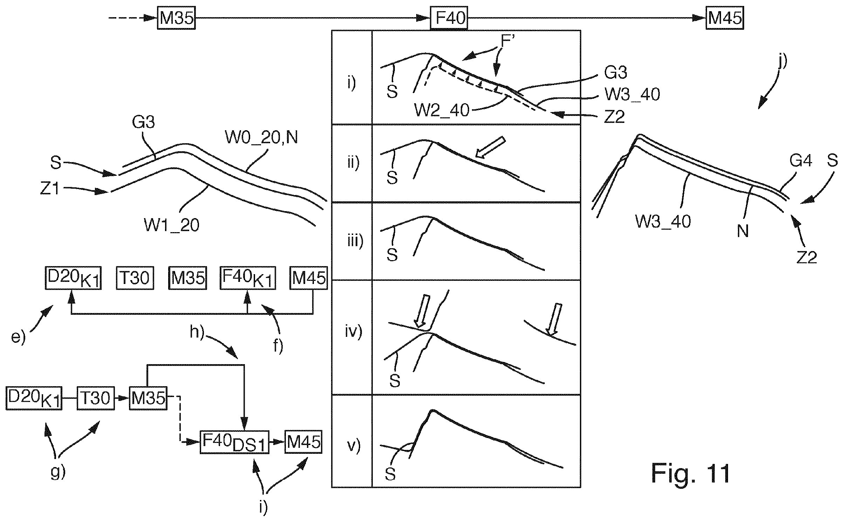

Hiernach wird in einem Schritt c) das Nachformen F40 simuliert. Dieses Simulieren ist vorliegend anhand der Teildarstellungen i) bis v) der Fig. 10 und 11 verdeutlicht. In der Teildarstellung i) ist das Werkstück S an der vorliegenden Wirkfläche des zweiten Werkzeugs Z2 aufgenommen. Die Teildarstellung ii) bezieht sich auf einen beginnenden und die Teildarstellung iii) auf einen vollendeten Schließzustand des Werkzeugs Z2. Weiter beziehen sich die Teildarstellungen iv) und v) auf einen beginnenden bzw. einen abgeschlossenen Nachformprozess des Werkstücks S.

Das Simulieren c) umfasst zudem ein Ermitteln M45 der nun vorliegenden elastisch rückgefederten Rückfederungsgeometrie G2 des Werkstücks S. In geschlossenem Zustand des Werkzeugs Z2 stimmt die Geometrie des Werkstücks S demgegenüber wenigstens abschnittsweise mit der Wirkfläche W1_40 überein (vgl. Teildarstellung v)).

Hiernach wird in einem Schritt d) eine geometrische Abweichung des Werkstücks S von der nach dem Nachformen F40 angestrebten Nullgeometrie N ermittelt. Diese Abweichung wird vorliegend in Form eines Abweichungs-Vektorfelds U ermittelt, das durch nicht näher bezeichnete Verschiebungsvektoren gebildet ist, die zwischen der angestrebten Nullgeometrie N und der nun vorliegenden Rückfederungsgeometrie G2 erstreckt sind.

Wie weiter anhand Fig. 11 verdeutlicht ist, wird hiernach in einem Schritt e) das erste Werkzeug Z1 zur Minimierung der geometrischen Abweichung bzw. des Abweichungs-Vektorfelds U angepasst. Vereinfacht ausgedrückt wird der die Nullgeometrie N repräsentierenden Wirkfläche WO_20 vorliegend das zuvor ermittelte Abweichungs-Vektorfeld U in richtungsinvertierter Weise aufgeprägt. Alternativ kann das erste Werkzeug unter Anwendung sonstiger hierfür geeigneter Methoden angepasst werden. Zur Vermeidung von Wiederholungen wird auf die diesbezüglichen obigen Ausführungen verwiesen.

In entsprechender Weise wird in einem Schritt f) das der Nachformoperation F40 zugrunde liegende weitere Werkzeug Z2 angepasst. Diese Anpassung erfolgt wiederum in Abhängigkeit des Abweichungs-Vektorfelds U und unter Berücksichtigung der zuvor in Abhängigkeit des Fehler-Vektorfelds F erfolgten Anpassung. Vereinfacht ausgedrückt wird der bereits angepassten Wirkfläche W1_40 vorliegend das Abweichungs-Vektorfeld U beispielsweise nach der Methode der inversen Vektoren aufgeprägt, wodurch sich die erneut bzw. zusätzlich angepasste Wirkfläche W2_40 ergibt (vgl. Fig. 11, Teildarstellung i)).

Hiernach wird in einem Schritt g) die Formoperation D20 erneut und unter Verwendung der nun vorliegenden Wirkfläche W1_20 simuliert. In geschlossenem Zustand des Werkzeugs Z1 stimmt die Geometrie des Werkstücks dabei wenigstens abschnittsweise mit der Wirkfläche W1_20 überein. Nach erneutem Ermitteln M35 der elastischen Rückfederung ergibt sich die nun vorliegende elastisch rückgefederte Rückfederungsgeometrie G3 des Werkstücks S.

Hiernach wird in einem Schritt h) das dem Nachformen F40 zugrunde liegende Werkzeug Z2 in einer dem Schritt b) entsprechenden Weise angepasst. Dieses Anpassen umfasst wiederum eine Ermittlung eines Werkstücklagefehlers in Form eines Fehler-Vektorfelds F'. Zur Minimierung des nun vorliegenden Werkstücklagefehlers wird der zuvor im Schritt f) ermittelten Wirkfläche W2_40 vereinfacht ausgedrückt das Fehler-Vektorfeld F' aufgeprägt. Hierdurch ergibt sich eine nun vorliegende angepasste Wirkfläche W3_40.

In einem Schritt i) wird das Nachformen F40 erneut und nun unter Verwendung der Wirkfläche W3_40 simuliert. Diese Simulation erfolgt in einer dem Schritt c) entsprechenden Weise und umfasst wiederum das Ermitteln M45 der elastischen Rückfederung bzw. der nun vorliegenden Rückfederungsgeometrie G4.

In einem Schritt j) wird erneut die geometrische Abweichung zwischen der nun vorliegenden Rückfederungsgeometrie G4 und der nach dem Nachformen F40 angestrebten Nullgeometrie N ermittelt. Wie anhand Fig. 11 ersichtlich ist, ist diese Abweichung im Vergleich zu dem vorherigen nach dem Schritt d) vorliegenden Abweichungs-Vektorfeld U sehr gering. Vorliegend ist insoweit ein nicht näher bezeichnetes Konvergenzkriterium erfüllt, so dass die erreichte Werkzeugkompensation als anforderungsgerecht betrachtet und die Simulation beendet wird.

Hiernach können die auf diese Weise ermittelten Wirkflächen W1_20 und W3_40 als kompensierte Wirkgeometrien der jeweils repräsentierten realen Umformwerkzeuge festgelegt werden.

## Patentansprüche

1. Verfahren zur Ermittlung rückfederungs-kompensierter Wirkgeometrien für Umformwerkzeuge, die zur Herstellung eines Umformteils (S') mittels einer Abfolge mehrerer aufeinanderfolgender Formoperationen (OP20, OP40; D20, F40) vorgesehen sind, mit den computergestützten Schritten a) bis z), sowie mit dem Schritt z10):
a) Simulieren einer ersten Formoperation (OP20, D20) der Abfolge, wobei ein das Umformteil (S') repräsentierendes Werkstück (S) an einer Wirkfläche (W0_20) eines ersten Werkzeugs (Z1), das ein erstes Umformwerkzeug repräsentiert, aufgenommen und elastisch-plastisch umgeformt wird, und wobei eine hiernach vorliegende elastisch rückgefederte erste Rückfederungsgeometrie (G1) des Werkstücks (S) ermittelt wird;
b) Anpassen wenigstens eines weiteren Werkzeugs (Z2), das zur Verwendung in einer der ersten Formoperation (OP20, D20) nachfolgenden weiteren Formoperation (OP40, F40) der Abfolge vorgesehen ist und ein weiteres Umformwerkzeug repräsentiert, wobei eine Wirkfläche (W0_40) des wenigstens einen weiteren Werkzeugs wenigstens abschnittsweise in Abhängigkeit der ersten Rückfederungsgeometrie (G1) in Richtung der elastischen Rückfederung angepasst wird zur Minimierung eines Werkstücklagefehlers (L1) bei einer Aufnahme des zuvor umgeformten und elastisch rückgefederten Werkstücks an dem wenigstens einen weiteren Werkzeug (Z2);
c) Simulieren wenigstens der einen weiteren Formoperation (OP40, F40) der Abfolge, wobei das zuvor umgeformte und elastisch rückgefederte Werkstück (S) an der wenigstens abschnittsweise zur Minimierung des Werkstücklagefehlers (L1) angepassten Wirkfläche (W1_40) umgeformt wird, und wobei eine hiernach vorliegende elastisch rückgefederte weitere Rückfederungsgeometrie (G2) des Werkstücks (S) ermittelt wird;
d) Ermitteln einer geometrischen Abweichung (A1) des Werkstücks (S), wobei eine nach der wenigstens einen weiteren Formoperation (OP40, F40) angestrebte Nullgeometrie (N) des Werkstücks (S) mit der elastisch rückgefederten weiteren Rückfederungsgeometrie (G2) verglichen und in Abhängigkeit des Vergleichs eine Abweichungsgröße (U) ermittelt wird;
e) Anpassen des ersten Werkzeugs (Z1), wobei die Wirkfläche (W0_20) des ersten Werkzeugs (Z1) zur Minimierung der geometrischen Abweichung (A1) des Werkstücks (S) in Abhängigkeit der Abweichungsgröße (U) angepasst wird;
f) Anpassen des wenigstens einen weiteren Werkzeugs (Z2), wobei die zuvor gemäß Schritt b) angepasste Wirkfläche (W1_40) des wenigstens einen weiteren Werkzeugs (Z2) zusätzlich zur Minimierung der geometrischen Abweichung (A) des Werkstücks (S) direkt und unmittelbar in Abhängigkeit der Abweichungsgröße (U) entgegen der Richtung der elastischen Rückfederung angepasst wird;
z) Festlegen der angepassten Wirkflächen (W1_20, W2_40) der Werkzeuge (Z1, Z2) als rückfederungs-kompensierte Wirkgeometrien des jeweils repräsentierten Umformwerkzeugs und
z10) Fertigen des Umformwerkzeugs und/oder des wenigstens einen weiteren Umformwerkzeugs unter Ausbildung der jeweils festgelegten rückfederungs-kompensierten Wirkgeometrie.

2. Verfahren nach Anspruch 1, worin ein Einfluss des Anpassens des wenigstens einen weiteren Werkzeugs (Z2) zur Minimierung des Werkstücklagefehlers (L1) in Schritt b) auf die sich ergebende geometrische Abweichung (A1) des Werkstücks insoweit berücksichtigt wird, als auf den Schritt f) folgend die Schritte vorgesehen sind:
g) erneutes Simulieren der ersten Formoperation (OP20, D20) der Abfolge in einer dem Schritt a) entsprechenden Weise unter Verwendung der zuvor angepassten nun vorliegenden Wirkfläche (W1_20) des ersten Werkzeugs (Z1);
h) erneutes Anpassen des wenigstens einen weiteren Werkzeugs (Z2) zur Minimierung des Werkstücklagefehlers in einer dem Schritt b) entsprechenden Weise, wobei die zuvor angepasste nun vorliegende Wirkfläche (W2_40) des wenigstens einen weiteren Werkzeugs (Z2) zusätzlich in Abhängigkeit einer nach dem erneuten Simulieren der ersten Formoperation (OP20, F20) nun vorliegenden elastisch rückgefederten Rückfederungsgeometrie (G3) des Werkstücks (S) angepasst wird;
i) erneutes Simulieren der wenigstens einen weiteren Formoperation (OP40, F40) der Abfolge in einer dem Schritt c) entsprechenden Weise unter Verwendung der zuvor erneut angepassten nun vorliegenden Wirkfläche (W2'_40, W3_40) des wenigstens einen weiteren Werkzeugs (Z2);
j) erneutes Ermitteln der geometrischen Abweichung (A2) des Werkstücks (S) in einer dem Schritt d) entsprechenden Weise, wobei die angestrebte Nullgeometrie (N) des Werkstücks (S) mit einer nach dem erneuten Simulieren der wenigstens einen weiteren Formoperation (OP40, F40) nun vorliegenden Rückfederungsgeometrie (G4) verglichen und in Abhängigkeit des Vergleichs eine nun vorliegende Abweichungsgröße ermittelt wird;
k) erneutes Anpassen des ersten Werkzeugs (Z1) zur Minimierung der geometrischen Abweichung (A2) des Werkstücks (S) in einer dem Schritt e) entsprechenden Weise und in Abhängigkeit der nun vorliegenden Abweichungsgröße; und
I) erneutes Anpassen des wenigstens einen weiteren Werkzeugs (Z2) zur Minimierung der geometrischen Abweichung (A2) des Werkstücks (S) in einer dem Schritt f) entsprechenden Weise und in Abhängigkeit der nun vorliegenden Abweichungsgröße.

3. Verfahren nach Anspruch 2, worin zur Berücksichtigung vorherrschender Nichtlinearitäten vorgesehen ist, dass die Schritte g) bis I) iterativ bis zum Erreichen einer vorgesehenen Anzahl von Iterationen und/oder bis zum Erreichen eines der Abweichungsgröße und/oder dem Werkstücklagefehler zugeordneten Konvergenzkriteriums ausgeführt werden.

4. Verfahren nach einem der vorhergehenden Ansprüche, worin mehrere weitere Formoperationen (OP40) mit jeweils einem weiteren Werkzeug (Z2) vorgesehen sind, wobei das Anpassen und/oder erneute Anpassen des jeweiligen weiteren Werkzeugs (Z2) zur Minimierung des jeweiligen Werkstücklagefehlers (L1, L2) in Abhängigkeit einer elastisch rückgefederten Rückfederungsgeometrie (G1, G2) des Werkstücks (S) erfolgt, die unmittelbar nach dem Simulieren einer in der Abfolge vorangegangenen Formoperation (OP20, OP40) vorliegt.

5. Verfahren nach einem der vorhergehenden Ansprüche, worin das Simulieren der Formoperationen ein computergestütztes Berechnen der jeweiligen elastisch rückgefederten Rückfederungsgeometrie (G1 bis G8) des Werkstücks (S) unter Anwendung einer nichtlinearen Finite-Elemente-Methode umfasst.

6. Verfahren nach einem der vorhergehenden Ansprüche, worin das Ermitteln und/oder erneute Ermitteln der geometrischen Abweichung (A1, A2, A3) des Werkstücks (S) die Schritte umfasst: Ermitteln der vorliegenden Abweichungsgröße in Form eines Abweichungs-Vektorfelds (U), das durch Verschiebungsvektoren gebildet ist, die zwischen der angestrebten Nullgeometrie (N) des Werkstücks (S) und der vorliegenden Rückfederungsgeometrie (G2, G4, G6, G8) des Werkstücks (S) erstreckt sind.

7. Verfahren nach Anspruch 6, worin das Anpassen und/oder erneute Anpassen der Wirkflächen zur Minimierung der geometrischen Abweichung (A1, A2, A3) des Werkstücks (S) die Schritte umfasst: Ermitteln einer Korrekturgeometrie der Wirkfläche des jeweiligen Werkzeugs (Z1, Z2) in Abhängigkeit des Abweichungs-Vektorfelds (U), wobei die Korrekturgeometrie in Bezug auf eine Nullwirkfläche (N) des jeweiligen Werkzeugs (Z1, Z2) oder in Bezug auf eine bereits vorliegende angepasste Wirkfläche des jeweiligen Werkzeugs (Z1, Z2) ermittelt wird.

8. Verfahren nach einem der vorhergehenden Ansprüche, worin das Anpassen und/oder erneute Anpassen der Wirkfläche des wenigstens einen weiteren Werkzeugs (Z2) zur Minimierung des Werkstücklagefehlers (L1, L2) die Schritte umfasst:
Ermitteln des vorliegenden Werkstücklagefehlers (L1, L2) in Form eines Fehler-Vektorfelds (F, F'), das durch Vektoren gebildet ist, die - in Bezug auf einen Zustand, in dem das Werkstück (S) an dem Werkzeug (Z2) aufgenommen ist - zwischen der vorliegenden Wirkfläche des Werkzeugs (Z2) und der vorliegenden elastisch rückgefederten Rückfederungsgeometrie des Werkstücks (S) erstreckt sind;
Ermitteln einer in Abhängigkeit des Fehler-Vektorfelds (F, F') in Richtung der Rückfederungsgeometrie angenäherten Wirkfläche.

9. Verfahren zur Ermittlung rückfederungs-kompensierter Wirkgeometrien für Umformwerkzeuge, die zur Herstellung eines Umformteils (S') mittels einer Abfolge mehrerer aufeinanderfolgender Formoperationen (OP20, OP40) vorgesehen sind, mit den computergestützten Schritten a1) bis z1), sowie mit dem Schritt z10):
a1) Simulieren einer ersten Formoperation (OP20) der Abfolge, wobei ein das Umformteil (S') repräsentierendes Werkstück (S) an einer Wirkfläche (W0_20) eines ersten Werkzeugs, das ein erstes Umformwerkzeug repräsentiert, aufgenommen und elastisch-plastisch umgeformt wird, und wobei eine hiernach vorliegende elastisch rückgefederte erste Rückfederungsgeometrie (G1) des Werkstücks ermittelt wird;
b1) Ermitteln eines Werkstücklagefehlers (L1), wobei der Werkstücklagefehler (L1) in Form einer geometrischen Abweichung zwischen der elastisch rückgefederten ersten Rückfederungsgeometrie (G1) und einer Wirkfläche (W0_40) eines weiteren Werkzeugs ermittelt wird, wobei das weitere Werkzeug zur Verwendung in einer der ersten Formoperation (OP20) nachfolgenden weiteren Formoperation (OP40) der Abfolge vorgesehen ist und ein weiteres Umformwerkzeug repräsentiert;
c1) Anpassen des ersten Werkzeugs, wobei die Wirkfläche (W0_20) des ersten Werkzeugs in Abhängigkeit des ermittelten Werkstücklagefehlers (L1) wenigstens abschnittsweise zur Minimierung des Werkstücklagefehlers in Richtung der elastischen Rückfederung angepasst wird;
d1) erneutes Simulieren der ersten Formoperation (OP20) der Abfolge in einer dem Schritt a1) entsprechenden Weise unter Verwendung der zuvor angepassten nun vorliegenden Wirkfläche (W1_20) des ersten Werkzeugs;
e1) Simulieren wenigstens der einen weiteren Formoperation (OP40) der Abfolge, wobei das Werkstück (S) in seiner nach dem erneuten Simulieren der ersten Formoperation (OP20) nun vorliegenden Rückfederungsgeometrie (G2) an der Wirkfläche (W0_40) des wenigstens einen weiteren Werkzeugs aufgenommen und elastisch-plastisch umgeformt wird, und wobei eine hiernach vorliegende elastisch rückgefederte weitere Rückfederungsgeometrie (G3) des Werkstückes ermittelt wird;
f1) Ermitteln einer geometrischen Abweichung (A1) des Werkstücks, wobei eine nach der wenigstens einen weiteren Formoperation (OP40) angestrebte Nullgeometrie (N) des Werkstücks (S) mit der elastisch rückgefederten weiteren Rückfederungsgeometrie (G3) verglichen und in Abhängigkeit des Vergleichs eine Abweichungsgröße ermittelt wird;
g1) Anpassen des ersten Werkzeugs, wobei die zuvor gemäß Schritt c1) angepasste Wirkfläche (W1_20) zusätzlich zur Minimierung der geometrischen Abweichung (A1) des Werkstücks (S) direkt und unmittelbar in Abhängigkeit der Abweichungsgröße entgegen der Richtung der elastischen Rückfederung angepasst wird;
h1) Anpassen des wenigstens einen weiteren Werkzeugs, wobei die Wirkfläche (W0_40) des wenigstens einen weiteren Werkzeugs zur Minimierung der geometrischen Abweichung (A1) des Werkstücks (S) direkt und unmittelbar in Abhängigkeit der Abweichungsgröße entgegen der Richtung der elastischen Rückfederung angepasst wird;
z1) Festlegen der angepassten Wirkflächen (W2_20, W1_40) der Werkzeuge als rückfederungs-kompensierte Wirkgeometrien des jeweils repräsentierten Umformwerkzeugs und
z10) Fertigen des Umformwerkzeugs und/oder des wenigstens einen weiteren Umformwerkzeugs unter Ausbildung der jeweils festgelegten rückfederungs-kompensierten Wirkgeometrie.

10. Verfahren nach einem der Ansprüche 1-9 gefolgt von der Herstellung eines Umformteils (S'), wobei das Umformteil (S') unter Einwirkung des nach einem der Ansprüche 1-9 gefertigten Umformwerkzeugs umgeformt wird.

## Claims

1. Method for determining springback-compensated effective geometries for forming tools which are provided for the purpose of producing a formed part (S') by means of a sequence of multiple consecutive forming operations (OP20, OP40; D20, F40), having the computer-aided steps a) to z), and having step z10):
a) simulating a first forming operation (OP20, D20) in the sequence, wherein a workpiece (S) representing the formed part (S') is received on an effective surface (W0_20) of a first tool (Z1) representing a first forming tool and is elastically-plastically formed, and wherein an elastically sprung-back first springback geometry (G1) of the workpiece (S) that is subsequently present is determined;
b) adapting at least one further tool (Z2) which is provided for use in a further forming operation (OP40, F40) in the sequence following the first forming operation (OP20, D20) and represents a further forming tool, wherein an effective surface (W0_40) of the at least one further tool is adapted at least in sections in the direction of the elastic springback on the basis of the first springback geometry (G1) in order to minimize a workpiece positional error (L1) when receiving the previously formed and elastically sprung-back workpiece on the at least one further tool (Z2);
c) simulating at least the one further forming operation (OP40, F40) in the sequence, wherein the previously formed and elastically sprung-back workpiece (S) is formed on the effective surface (W1_40) adapted at least in sections for minimizing the workpiece positional error (L1), and wherein an elastically sprung-back further springback geometry (G2) of the workpiece (S) that is subsequently present is determined;
d) determining a geometric deviation (A1) of the workpiece (S), wherein a zero geometry (N) of the workpiece (S), which is desired after the at least one further forming operation (OP40, F40), is compared with the elastically sprung-back further springback geometry (G2) and a deviation variable (U) is determined on the basis of the comparison;
e) adapting the first tool (Z1), wherein the effective surface (W0_20) of the first tool (Z1) is adapted on the basis of the deviation variable (U) in order to minimize the geometric deviation (A1) of the workpiece (S);
f) adapting the at least one further tool (Z2), wherein the effective surface (W1_40) of the at least one further tool (Z2) that was previously adapted according to step b), in addition to minimizing the geometric deviation (A) of the workpiece (S), is adapted directly and immediately on the basis of the deviation variable (U) counter to the direction of the elastic springback;
z) defining the adapted effective surfaces (W1_20, W2_40) of the tools (Z1, Z2) as springback-compensated effective geometries of the respectively represented forming tool, and
z10) manufacturing the forming tool and/or the at least one further forming tool, with the formation of the respectively defined springback-compensated effective geometry.

2. Method according to claim **1,** wherein an influence of adapting the at least one further tool (Z2) for minimizing the workpiece positional error (L1) in step b) on the resulting geometric deviation (A1) of the workpiece is taken into account insofar as the following steps are provided following step f):
g) re-simulating the first forming operation (OP20, D20) in the sequence in a manner corresponding to step a) using the previously adapted effective surface (W1_20) of the first tool (Z1) that is now present;
h) re-adapting the at least one further tool (Z2) for minimizing the workpiece positional error in a manner corresponding to step b), wherein the previously adapted effective surface (W2_40) of the at least one further tool (Z2) that is now present is additionally adapted on the basis of an elastically sprung-back geometry (G3) of the workpiece (S) that is now present following the re-simulation of the first forming operation (OP20, F20);
i) re-simulating the at least one further forming operation (OP40, F40) in the sequence in a manner corresponding to step c) using the previously re-adapted effective surface (W2'_40, W3_40) of the at least one further tool (Z2) that is now present;
j) re-determining the geometric deviation (A2) of the workpiece (S) in a manner corresponding to step d), wherein the desired zero geometry (N) of the workpiece (S) is compared with a springback geometry (G4) now present following the re-simulation of the at least one further forming operation (OP40, F40) and a deviation variable that is now present is determined on the basis of the comparison;
k) re-adapting the first tool (Z1) for minimizing the geometric deviation (A2) of the workpiece (S) in a manner corresponding to step e) and on the basis of the deviation variable that is now present; and
1) re-adapting the at least one further tool (Z2) for minimizing the geometric deviation (A2) of the workpiece (S) in a manner corresponding to step f) and on the basis of the deviation variable that is now present.

3. Method according to claim **2,** wherein, in order to take into account predominant non-linearities, provision is made for steps g) to i) to be carried out iteratively until a planned number of iterations is reached and/or until a convergence criterion assigned to the deviation variable and/or the workpiece positional error is achieved.

4. Method according to one of the preceding claims, wherein a plurality of further forming operations (OP40) each with a further tool (Z2) are provided, wherein the adaptation and/or re-adaptation of the respective further tool (Z2) for minimizing the respective workpiece positional error (L1, L2) is carried out on the basis of an elastically sprung-back springback geometry (G1, G2) of the workpiece (S) which is present immediately after simulating a preceding forming operation (OP20, OP40) in the sequence.

5. Method according to one of the preceding claims, wherein the simulation of the forming operations comprises computer-aided calculation of the respective elastically sprung-back springback geometry (G1 to G8) of the workpiece (S) using a nonlinear finite element method.

6. Method according to one of the preceding claims, wherein the determination and/or re-determination of the geometric deviation (A1, A2, A3) of the workpiece (S) comprises the following steps: determining the present deviation variable in the form of a deviation vector field (U) formed by displacement vectors that extend between the desired zero geometry (N) of the workpiece (S) and the present springback geometry (G2, G4, G6, G8) of the workpiece (S).

7. Method according to claim **6,** wherein the adaptation and/or re-adaptation of the effective surfaces for minimizing the geometric deviation (A1, A2, A3) of the workpiece (S) comprises the following steps: determining a correction geometry of the effective surface of the respective tool (Z1, Z2) on the basis of the deviation vector field (U), wherein the correction geometry is determined in relation to a zero effective surface (N) of the respective tool (Z1, Z2) or in relation to an adapted effective surface of the respective tool (Z1, Z2) that is already present.

8. Method according to one of the preceding claims, wherein the adaptation and/or re-adaptation of the effective surface of the at least one further tool (Z2) for minimizing the workpiece positional error (L1, L2) comprises the following steps:
determining the present workpiece positional error (L1, L2) in the form of an error vector field (F, F') formed by vectors which - in relation to a state in which the workpiece (S) is received on the tool (Z2) - extend between the present effective surface of the tool (Z2) and the present elastically sprung-back springback geometry of the workpiece (S);
determining an effective surface approximated in the direction of the springback geometry on the basis of the error vector field (F, F').

9. Method for determining springback-compensated effective geometries for forming tools which are provided for the purpose of producing a formed part (S') by means of a sequence of multiple consecutive forming operations (OP20, OP40), having the computer-aided steps a1) to z1), and having step z10):
a1) simulating a first forming operation (OP20) in the sequence, wherein a workpiece (S) representing the formed part (S') is received on an effective surface (W0_20) of a first tool representing a first forming tool and is elastically-plastically formed, and wherein an elastically sprung-back first springback geometry (G1) of the workpiece that is subsequently present is determined;
b1) determining a workpiece positional error (L1), wherein the workpiece positional error (L1) is determined in the form of a geometric deviation between the elastically sprung-back first springback geometry (G1) and an effective surface (W0_40) of a further tool, wherein the further tool is provided for use in a further forming operation (OP40) in the sequence following the first forming operation (OP20) and represents a further forming tool;
c1) adapting the first tool, wherein the effective surface (W0_20) of the first tool is adapted at least in sections in the direction of the elastic springback on the basis of the determined workpiece positional error (L1) in order to minimize the workpiece positional error;
d1) re-simulating the first forming operation (OP20) in the sequence in a manner corresponding to step a1) using the previously adapted effective surface (W1_20) of the first tool that is now present;
e1) simulating at least the one further forming operation (OP40) in the sequence, wherein the workpiece (S) is received, in its springback geometry (G2) that is now present after the re-simulation of the first forming operation (OP20), on the effective surface (W0_40) of the at least one further tool and is elastically-plastically formed, and wherein an elastically sprung-back further springback geometry (G3) of the workpiece that is subsequently present is determined;
f1) determining a geometric deviation (A1) of the workpiece, wherein a zero geometry (N) of the workpiece (S), which is desired after the at least one further forming operation (OP40), is compared with the elastically sprung-back further springback geometry (G3) and a deviation variable is determined on the basis of the comparison;
g1) adapting the first tool, wherein the effective surface (W1_20) that was previously adapted according to step c1), in addition to minimizing the geometric deviation (A1) of the workpiece (S), is adapted directly and immediately on the basis of the deviation variable counter to the direction of the elastic springback;
h1) adapting the at least one further tool, wherein the effective surface (W0_40) of the at least one further tool is adapted directly and immediately on the basis of the deviation variable counter to the direction of the elastic springback in order to minimize the geometric deviation (A1) of the workpiece (S);
z1) defining the adapted effective surfaces (W2_20, W1_40) of the tools as springback-compensated effective geometries of the respectively represented forming tool, and
z10) manufacturing the forming tool and/or the at least one further forming tool, with the formation of the respectively defined springback-compensated effective geometry.

10. Method according to one of claims 1-9 followed by the production of a formed part (S'), wherein the formed part (S') is formed under the action of the forming tool manufactured according to one of claims **1-9.**

## Revendications

1. Procédé de détermination de géométries actives compensées par retour élastique pour des outils de mise en forme qui sont prévus pour la fabrication d'une pièce mise en forme (S') au moyen d'une séquence de plusieurs opérations de formage successives (OP20, OP40 ; D20, F40), avec les étapes assistées par ordinateur a) à z), ainsi qu'avec l'étape z10) :
a) la simulation d'une première opération de formage (OP20, D20) de la séquence, une pièce (S) représentant la pièce mise en forme (S') étant reçue sur une surface active (W0_20) d'un premier outil (Z1) qui représente un premier outil de mise en forme et étant mise en forme élastiquement et plastiquement, et une première géométrie de retour élastique (G1) de la pièce (S) présente après retour élastique étant déterminée ;
b) l'adaptation d'au moins un autre outil (Z2) qui est prévu pour être utilisé dans une autre opération de formage (OP40, F40) de la séquence suivant la première opération de formage (OP20, D20) et qui représente un autre outil de mise en forme, une surface active (W0_40) de l'au moins un autre outil étant adaptée au moins par sections en fonction de la première géométrie de retour élastique (G1) dans la direction du retour élastique pour minimiser une erreur de position de pièce (L1) lors d'une réception de la pièce précédemment mise en forme et après retour élastique sur l'au moins un autre outil (Z2) ;
c) la simulation au moins de l'autre opération de formage (OP40, F40) de la séquence, la pièce (S) précédemment mise en forme et après retour élastique étant mise en forme sur la surface active (W1_40) adaptée au moins par sections pour minimiser l'erreur de position de pièce (L1), et une autre géométrie de retour élastique (G2) de la pièce (S) présente après retour élastique étant déterminée ;
d) la détermination d'un écart géométrique (A1) de la pièce (S), une géométrie zéro (N) de la pièce (S), visée après l'au moins une autre opération de formage (OP40, F40), étant comparée à l'autre géométrie de retour élastique (G2) après retour élastique et une grandeur d'écart (U) étant déterminée en fonction de la comparaison ;
**e) l'adaptation** du premier outil (Z1), la surface active (W0_20) du premier outil (Z1) étant adaptée pour minimiser l'écart géométrique (A1) de la pièce (S) en fonction de la grandeur d'écart (U) ;
f) l'adaptation de l'au moins un autre outil (Z2), la surface active (W1_40) de l'au moins un autre outil (Z2), précédemment adaptée selon l'étape b), étant adaptée en outre pour minimiser l'écart géométrique (A) de la pièce (S) directement et immédiatement en fonction de la grandeur d'écart (U) à l'encontre de la direction du retour élastique ;
z) la définition des surfaces actives adaptées (W1_20, W2_40) des outils (Z1, Z2) en tant que géométries actives compensées par retour élastique de l'outil de mise en forme respectivement représenté, et
z10) la fabrication de l'outil de mise en forme et/ou de l'au moins un autre outil de mise en forme en réalisant la géométrie active compensée par retour élastique respectivement définie.

2. Procédé selon la revendication **1,** dans lequel une influence de l'adaptation de l'au moins un autre outil (Z2) pour minimiser l'erreur de position de pièce (L1) à l'étape b) sur l'écart géométrique résultant (A1) de la pièce est prise en compte dans la mesure où les étapes sont prévues à la suite de l'étape f) :
g) la nouvelle simulation de la première opération de formage (OP20, D20) de la séquence d'une manière correspondant à l'étape a) en utilisant la surface active (W1_20) du premier outil (Z1) adaptée précédemment qui est maintenant présente ;
h) la nouvelle adaptation de l'au moins un autre outil (Z2) pour minimiser l'erreur de position de pièce d'une manière correspondant à l'étape b), la surface active (W2_40) adaptée précédemment qui est maintenant présente de l'au moins un autre outil (Z2) étant en outre adaptée en fonction d'une géométrie de retour élastique (G3) de la pièce (S) maintenant présente après retour élastique après la nouvelle simulation de la première opération de formage (OP20, F20) ;
i) la nouvelle simulation de l'au moins une autre opération de formage (OP40, F40) de la séquence d'une manière correspondant à l'étape c) en utilisant la surface active (W2'_40, W3_40) de l'au moins un autre outil (Z2) précédemment de nouveau adaptée qui est maintenant présente ;
j) la nouvelle détermination de l'écart géométrique (A2) de la pièce (S) d'une manière correspondant à l'étape d), la géométrie zéro (N) visée de la pièce (S) étant comparée à une géométrie de retour élastique (G4) maintenant présente après la nouvelle simulation de l'au moins une autre opération de formage (OP40, F40) et une grandeur d'écart maintenant présente étant déterminée en fonction de la comparaison ;
k) la nouvelle adaptation du premier outil (Z1) pour minimiser l'écart géométrique (A2) de la pièce (S) d'une manière correspondant à l'étape e) et en fonction de la quantité d'écart maintenant présente ; et
1) la nouvelle adaptation de l'au moins un autre outil (Z2) pour minimiser l'écart géométrique (A2) de la pièce (S) d'une manière correspondant à l'étape f) et en fonction de la quantité d'écart maintenant présente.

3. Procédé selon la revendication **2,** dans lequel, pour tenir compte des non-linéarités prédominantes, il est prévu que les étapes g) à 1) soient exécutées de manière itérative jusqu'à ce qu'un nombre prévu d'itérations soit atteint et/ou jusqu'à ce qu'un critère de convergence associé à la grandeur d'écart et/ou à l'erreur de position de pièce soit atteint.

4. Procédé selon l'une quelconque des revendications précédentes, dans lequel plusieurs autres opérations de formage (OP40) sont prévues avec respectivement un autre outil (Z2), l'adaptation et/ou la nouvelle adaptation de l'autre outil respectif (Z2) pour minimiser l'erreur de position de pièce respective (L1, L2) s'effectuant en fonction d'une géométrie de retour élastique (G1, G2) de la pièce (S) après retour élastique, qui est présente immédiatement après la simulation d'une opération de formage (OP20, OP40) précédente dans la séquence.

5. Procédé selon l'une quelconque des revendications précédentes, dans lequel la simulation des opérations de formage comprend un calcul assisté par ordinateur de la géométrie de retour élastique respective (G1 à G8) de la pièce (S) après retour élastique en utilisant une méthode d'éléments finis non linéaire.

6. Procédé selon l'une quelconque des revendications précédentes, dans lequel la détermination et/ou la nouvelle détermination de l'écart géométrique (A1, A2, A3) de la pièce (S) comprend les étapes suivantes : la détermination de la grandeur d'écart présente sous la forme d'un champ vectoriel d'écart (U) formé par des vecteurs de déplacement qui s'étendent entre la géométrie zéro visée (N) de la pièce à usiner (S) et la géométrie de retour élastique présente (G2, G4, G6, G8) de la pièce (S).

7. Procédé selon la revendication 6, dans lequel l'adaptation et/ou la nouvelle adaptation des surfaces actives pour minimiser l'écart géométrique (A1, A2, A3) de la pièce (S) comprend les étapes suivantes : la détermination d'une géométrie de correction de la surface active de l'outil respectif (Z1, Z2) en fonction du champ vectoriel d'écart (U), la géométrie de correction étant déterminée par rapport à une surface active zéro (N) de l'outil respectif (Z1, Z2) ou par rapport à une surface active adaptée déjà présente de l'outil respectif (Z1, Z2).

8. Procédé selon l'une quelconque des revendications précédentes, dans lequel l'adaptation et/ou la nouvelle adaptation de la surface active de l'au moins un autre outil (Z2) pour minimiser l'erreur de position de pièce (L1, L2) comprend les étapes suivantes :
la détermination de l'erreur de position de pièce présente (L1, L2) sous la forme d'un champ vectoriel d'erreur (F, F') qui est formé par des vecteurs qui - par rapport à un état dans lequel la pièce (S) est reçue sur l'outil (Z2) - s'étendent entre la surface active présente de l'outil (Z2) et la géométrie de retour élastique de la pièce (S) présente après retour élastique ;
la détermination d'une surface active approchée en fonction du champ vectoriel d'erreur (F, F') dans la direction de la géométrie du retour élastique.

9. Procédé de détermination de géométries actives compensées par retour élastique pour des outils de mise en forme qui sont prévus pour la fabrication d'une pièce mise en forme (S') au moyen d'une séquence de plusieurs opérations de formage successives (OP20, OP40), avec les étapes assistées par ordinateur a1) à z1), ainsi qu'avec l'étape z10) :
a1) la simulation d'une première opération de formage (OP20) de la séquence, une pièce (S) représentant la pièce mise en forme (S') étant reçue sur une surface active (W0_20) d'un premier outil qui représente un premier outil de mise en forme et étant mise en forme élastiquement et plastiquement, et une première géométrie de retour élastique (G1) de la pièce présente après retour élastique étant déterminée ;
b1) la détermination d'une erreur de position de pièce (L1), l'erreur de position de pièce (L1) étant déterminée sous la forme d'un écart géométrique entre la première géométrie de retour élastique (G1) après retour élastique et une surface active (W0_40) d'un autre outil, l'autre outil étant prévu pour être utilisé dans une autre opération de formage (OP40) de la séquence suivant la première opération de formage (OP20) et représentant un autre outil de mise en forme ;
c1) l'adaptation du premier outil, la surface active (W0_20) du premier outil étant adaptée en fonction de l'erreur de position de pièce (L1) déterminée au moins par sections pour minimiser l'erreur de position de pièce dans la direction du retour élastique ;
d1) la nouvelle simulation de la première opération de formage (OP20) de la séquence d'une manière correspondant à l'étape a1) en utilisant la surface active (W1_20) du premier outil précédemment adaptée qui est maintenant présente ;
e1) la simulation au moins de l'autre opération de formage (OP40) de la séquence, la pièce (S) étant reçue dans sa géométrie de retour élastique (G2) maintenant présente après la nouvelle simulation de la première opération de formage (OP20) sur la surface active (W0_40) de l'au moins un autre outil et étant mise en forme élastiquement et plastiquement, et une autre géométrie de retour élastique (G3) de la pièce présente après retour élastique étant déterminée ;
f1) la détermination d'un écart géométrique (A1) de la pièce, une géométrie zéro (N) de la pièce (S), visée après l'au moins une autre opération de formage (OP40), étant comparée à l'autre géométrie de retour élastique (G3) après retour élastique et une grandeur d'écart étant déterminée en fonction de la comparaison ;
g1) l'adaptation du premier outil, la surface active (W1_20) précédemment adaptée selon l'étape c1) étant adaptée en outre pour minimiser l'écart géométrique (A1) de la pièce (S), directement et immédiatement en fonction de la grandeur d'écart à l'encontre de la direction du retour élastique ;
h1) la nouvelle adaptation de l'au moins un autre outil, la surface active (W0_40) de l'au moins un autre outil étant adaptée pour minimiser l'écart géométrique (A1) de la pièce (S) directement et immédiatement en fonction de la grandeur d'écart à l'encontre de la direction du retour élastique ;
z1) la définition des surfaces actives adaptées (W2_20, W1_40) des outils en tant que géométries actives compensées par retour élastique de l'outil de mise en forme respectivement représenté, et
z10) la fabrication de l'outil de mise en forme et/ou de l'au moins un autre outil de mise en forme en réalisant la géométrie active compensée par retour élastique respectivement définie.

10. Procédé selon l'une quelconque des revendications 1 à 9, suivi de la fabrication d'une pièce mise en forme (S'), la pièce mise en forme (S') étant mise en forme sous l'action de l'outil de mise en forme fabriqué selon l'une quelconque des revendications 1 à 9.
